# EUROPÄISCHE PATENTSCHRIFT

(11) **EP 1 539 556 B1**
(45) Veröffentlichungstag und Bekanntmachung des Hinweises auf die Patenterteilung: **06.09.2006**
(21) Anmeldenummer: 01995708.3
(22) Anmeldetag: 21.12.2001
(51) Int. Cl.: B62D 35/02, B62D 37/02, B62D 29/04, B62D 25/10, B62D 25/06, D06N 7/00

(54) **FLÄCHIGER ABSCHNITT EINER AUSSENHAUT EINER FAHRZEUGKAROSSERIE**
FLAT SECTION OF THE OUTER SKIN OF THE BODYWORK OF A MOTOR VEHICLE
SECTION PLATE D'UNE ENVELOPPE EXTERNE D'UNE CARROSSERIE DE VEHICULE

(30) Priorität: 23.12.2000 DE 10064931; 23.03.2001 DE 10114276; 27.07.2001 DE 10136822; 28.11.2001 DE 10158364
(43) Veröffentlichungstag der Anmeldung: 15.06.2005
(73) Patentinhaber: Bayerische Motoren Werke Aktiengesellschaft, 80809 München (DE)
(72) Erfinder: BANGLE, Christopher, 82205 Gilching (DE); KRUSE, Klaudia, 80799 München (DE); PARDO, Fernando, Moorpark, CA 93021 (US); SCHWARZ, Christine, 80867 München (DE); WEISS, Verena, 80337 München (DE); MEHN, Reinhard, 85778 Haimhausen (DE); BISCHOFF, Christian, 82205 Gilching (DE); LANCIER, Sven, 80802 München (DE); WARMING, Anders, Malibu, CA 91320 (US); RINGER, Jürgen, 84072 Au in der Hallertau (DE); HAUMAYR, Werner, 81375 München (DE); PULZ, Helmut, 85435 Erding (DE); NEUREITER, Alfred, 85757 Karlsfeld (DE); SCHRÖDER, Silke, 85354 Freising (DE); MEUSEL, Martin, 81247 München (DE); GRECO, Mario, 80809 München (DE); PISTORIUS, Edwin, 82140 Olching (DE); VON SCHUTTENBACH, Raphael, 85051 Ingolstadt (DE); VON SCHUTTENBACH, Andreas, 85051 Ingolstadt (DE); RATZ, Peter, 82211 Herrsching (DE); KOOP, Björn, 82319 Starnberg (DE); HELM, Detlef, 86567 Hilgertshausen (DE); NURTSCH, Bernd, 83555 Gars (DE); SCHAEFER, Daniel, 82140 Olching (DE); KRIEGER, John, Oxnard, CA 93035 (US); SCULLY, Michael, Calabasas, CA 91302 (US)
(86) Internationale Anmeldenummer: PCT/EP2001/015203
(87) Internationale Veröffentlichungsnummer: WO 2002/051688

(56) Entgegenhaltungen:
- WO-A-95/31355
- DE-A- 10 026 264
- DE-A- 19 621 030
- DE-A- 19 712 648
- DE-A- 19 912 140
- DE-A- 19 942 061
- DE-U- 29 918 232
- US-A- 4 770 457
- US-A- 5 267 771
- US-A- 5 733 620
- US-A- 5 923 245
- US-B1- 6 309 009

## Beschreibung

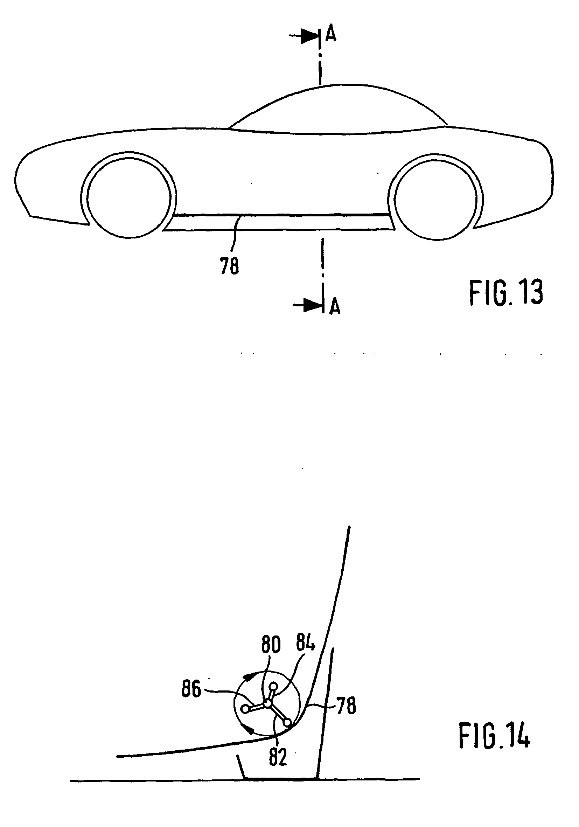

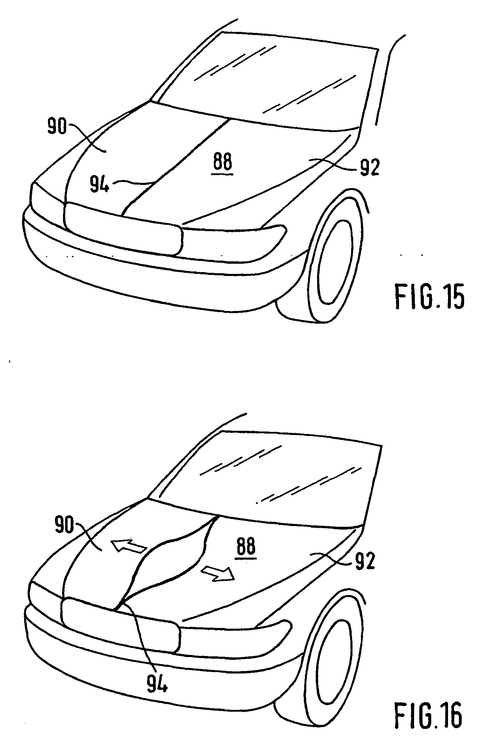

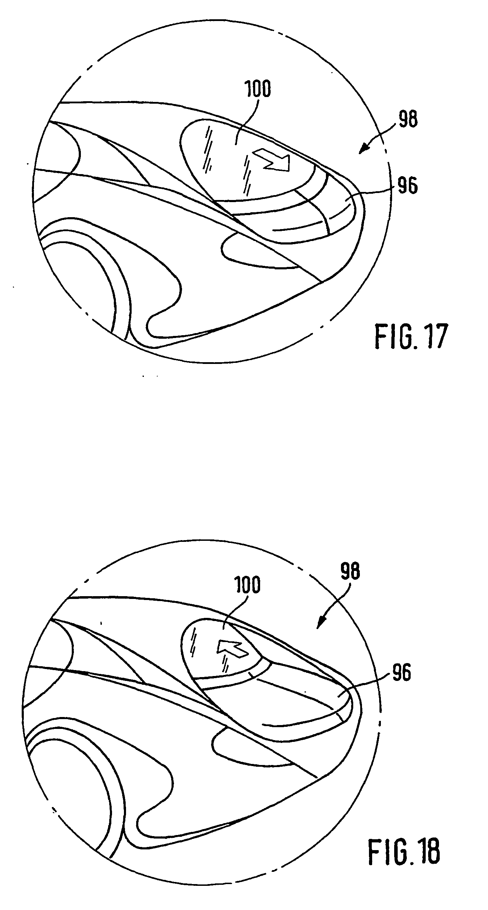

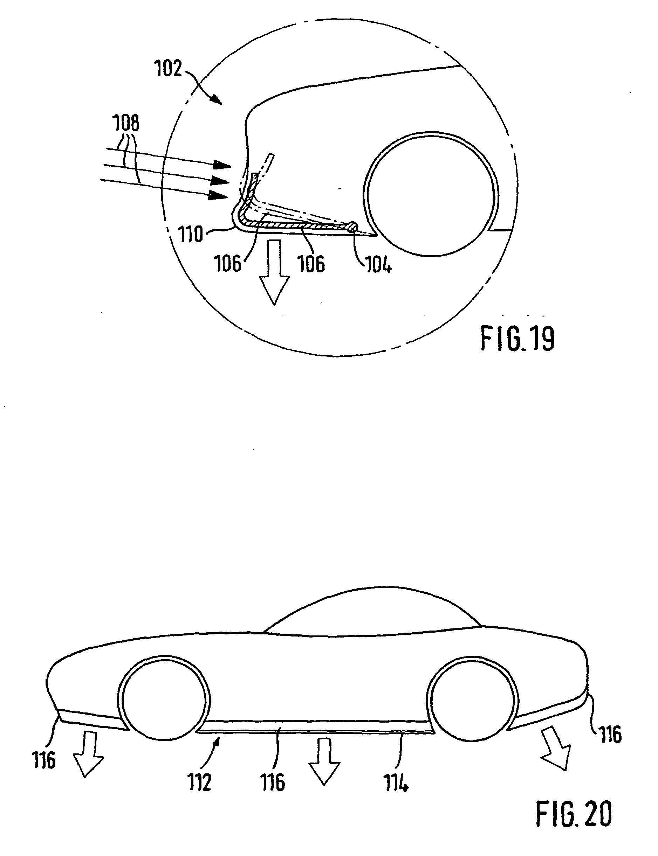

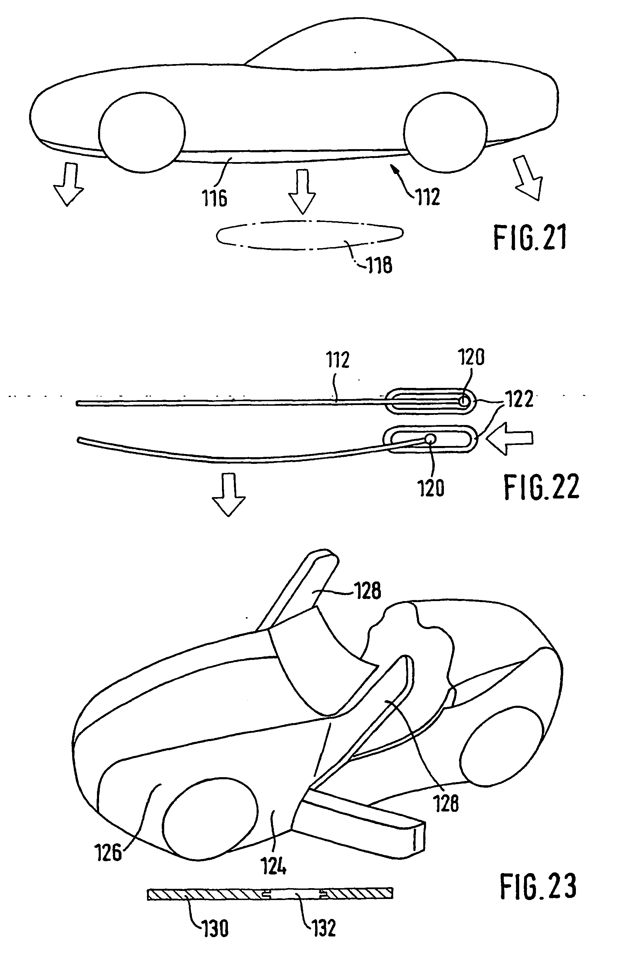

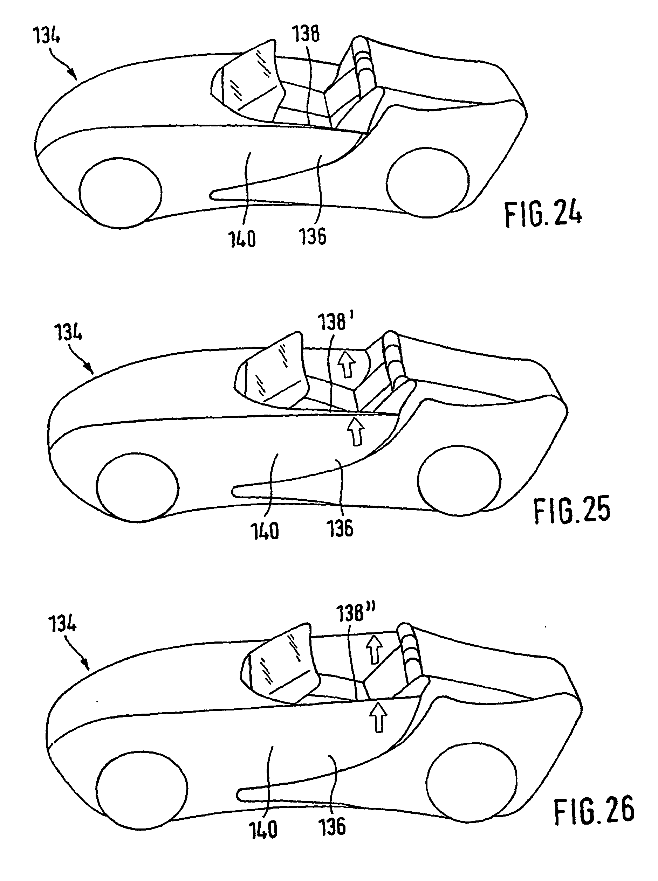

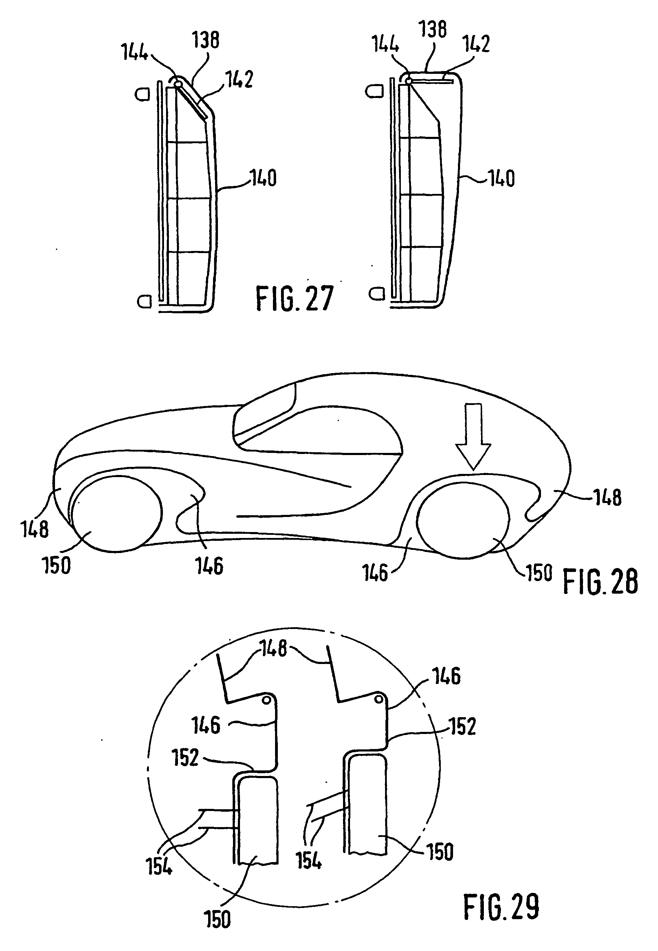

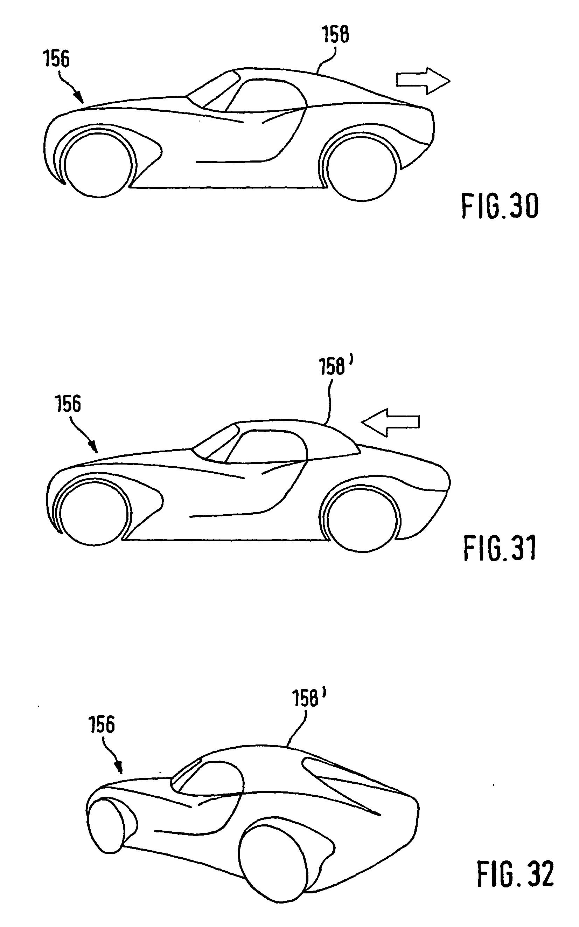

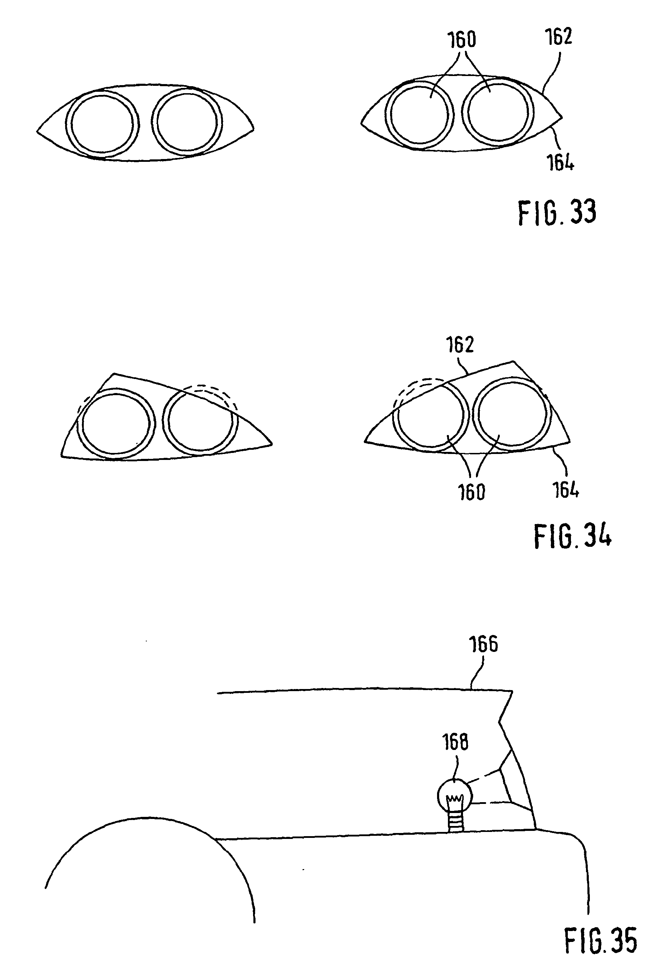

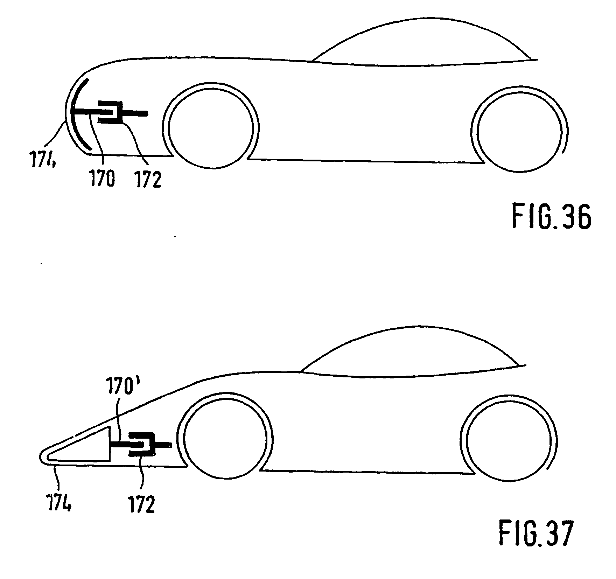

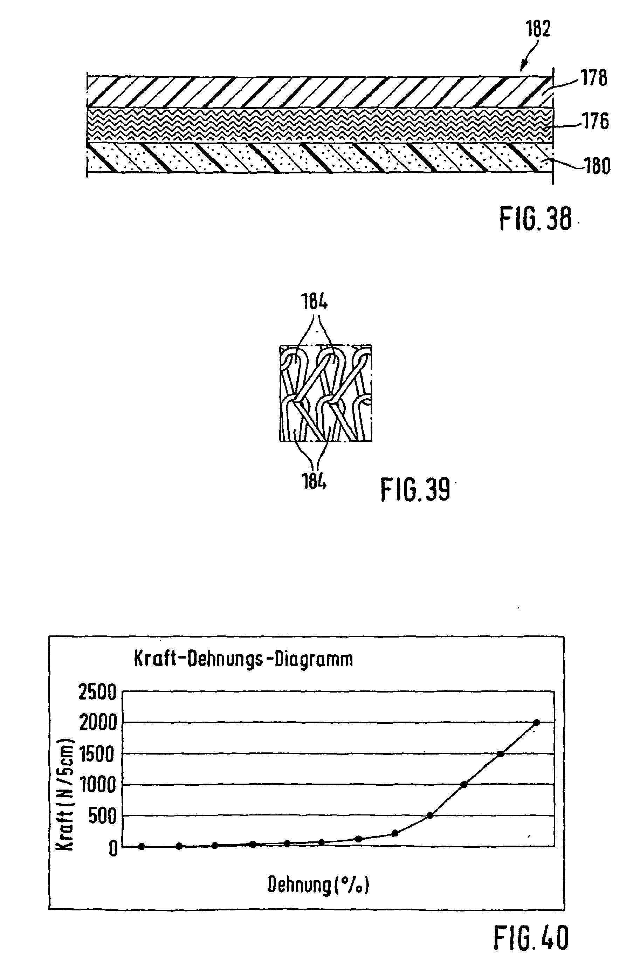

Die Erfindung betrifft einen flächigen Abschnitt einer Außenhaut einer Fahrzeugkarosserie gemäß des Oberbegriffs des Patentanspruchs 1. und wie in der Figuren 13-16 der DE 199 12140 beschrieben wird

Aus der deutschen Patentanmeldung DE 100 26 264.3 ist eine zumindest bereichsweise bewegliche Kraftfahrzeug-Außenhaut bekannt. Zur Bewegung dieser Außenhaut ist ein Aktuator vorgesehen, der ein polymeres und / oder ionenaustauschendes und / oder unterschiedliche Konformationen aufweisendes Material umfasst. Dieses Material ist durch physikalische oder chemische Effekte beweglich.

Aufgabe der Erfindung ist es, eine Außenhaut eine Fahrzeugkarosserie zu schaffen, bei der die zu Herstellung benötigten Werkzeugkosten sehr gering sind.

Diese Aufgabe wird durch die Merkmale des Patentanspruchs 1 gelöst.

Dazu besteht ein flächiger Abschnitt einer Außenhaut einer Fahrzeugkarosserie aus einem flexiblen Material. Ein flexibles Material, wie beispielsweise ein Stoff für Cabriolet-Verdecke, ist leicht beweglich, kann aber seine Oberfläche nicht vergrößern. Dieses Material ist zumindest über einen Teil eines Fahrzeuggerippes, wie beispielsweise einem Space-frame, gespannt. Erfindungsgemäß ist unter oder am Rand des Abschnitts mindestens ein mechanisch bewegbares Stellelement vorgesehen, das die Außenhaut verformen kann. Das Stellelement ist normalerweise mit dem Fahrzeuggerippe verbunden. Beispielsweise kann die Außenhaut über einen Bügel gespannt sein, der linear verlagerbar ist.

Durch den Ersatz klassischer Außenhaut-Teile aus Blech durch eine flexible Außenhaut sind keine teuren Blechumfotm-Werkzeuge mehr erforderlich. Das Gewicht der Außenhaut reduziert sich deutlich, da flexible Materialen, wie Stoffgewebe, ein deutlich geringeres Gewicht haben als entsprechende Blechteile. Auch gelten für die erfindungsgemäßen flexiblen Außenhaut-Teile nicht mehr die engen gestalterischen Grenzen von Außenhaut-Teilen aus Blech bezüglich Package sowie bezüglich einer formalen Integration weiterer Funktionen. Durch die Möglichkeit der aktiven Verformung der Außenhaut können auch bisher separate, verfahrbare Außenhaut-Teile integriert werden. Aufgrund dieser Integration in einem einzigen Außenhaut-Teil entstehen keine Fugen bzw. Spalten mehr, die für das optische Erscheinungsbild unerwünscht sind und meist aufwendig abgedichtet werden müssen, um Korrosion zu vermeiden. Ferner ist eine schnelle und preiswerte Reparatur möglich, da nicht alle unterschiedlichen Außenhaut-Teile auf Lager gelegt werden müssen, sondern beispielsweise eine einzige Rolle des flexiblen Materials für alle unterschiedlichen Außenhaut-Teile ausreicht. Auch der eigentliche Wechsel ist bei einer Außenhaut aus einem flexiblen Material einfach und damit schnell und wenig kostenintensiv möglich.

Vorteilhafterweise hat das flexible Material elastische Eigenschaften, das heißt, die Oberfläche des Materials ist vergrößerbar. Typische flexible Materialen mit elastischen Eigenschaften sind unter anderem Stretchstoffe, Latex sowie alle Elastomere. Eine flexible und elastische Außenhaut einer Fahrzeugkarosserie ermöglicht noch einmal eine deutlich freiere Formensprache, als eine Außenhaut, die nur flexibel ist.

Idealerweise kann der elastische Abschnitt der Außenhaut bei einem Unfall Aufprallenergie absorbieren. Dies ist eine sehr einfache, preiswerte und elegante Möglichkeit, einen sogenannten Fußgängeraufprallschutz zu realisieren. Bei geschickter Auslegung sind keine separaten Bauteile mehr dafür erforderlich. Auch die Fahrzeuginsassen können bei einem Crash geschützt werden, wenn die Karosserie-Außenhaut energieabsorbierende Eigenschaften hat.

An einem Rand des Abschnitts ist vorteilhafterweise eine Leiste befestigt, die an einem karosseriefesten Bauteil durch eine Clipsverbindung befestigbar ist. Die Leiste kann beispielsweise mit dem Rand des Abschnitts verklebt, verschweißt oder gemäß einer besonders geeigneten Weiterbildung auf den Rand des Abschnitts aufgenäht sein. Dazu ist die Leiste günstigerweise aus Kunststoff. Beispielsweise eine Nähnadel einer Industrienähmaschine kann mühelos eine nicht zu dicke Leiste aus einem Thermoplasten durchdringen. Die Clipsverbindung der Leiste mit dem karosseriefesten Bauteil kann beispielsweise so ausschauen, dass das karosseriefeste Bauteil eine Art Stange darstellt, auf die die Leiste mit einem Clipsabschnitt, der einen Kanal mit einem C-förmigen Querschnitt aufweist, aufgeclipst werden kann. Dieser Clipsabschnitt umschließt im aufgeclipsten Abschnitt dann die Stange zumindest teilweise formschlüssig.

Auf eine solche Clipsverbindung können, insbesondere bei Verwendung eines vorgespannten Abschnitts mit elastischen Eigenschaften, hohe Kräfte einwirken. Um diese Kräfte, die auf die Clipsverbindung einwirken, zu reduzieren, kann der Abschnitt nahe bei der Clipsverbindung in Kraftrichtung über einen Teil des Fahrzeuggerippes oder über ein Stellelement so gespannt sein, dass an den Kontaktstellen zwischen Fahrzeuggerippe bzw. Stellelement und dem Abschnitt Reibungskräfte auftreten. Die auf die Clipsverbindung wirkenden Kräfte reduzieren sich dadurch annähernd um die auftretenden Reibungskräfte.

Günstigerweise ist mindestens ein Stellelement translatorisch und / oder rotatorisch bewegbar. Beispielsweise pneumatische, elektrische, piezo-elektrische oder hydraulische Stellelemente gibt es standardmäßig für translatorische und rotatorische Bewegungen. Durch die Kombination mehrerer dieser Standard-Stellelemente ist jede Bewegungskinematik darstellbar, ohne eine komplexe Sonderanfertigung eines Stellelementes zu benötigen. Alternativ sind auch Stellelemente möglich, die allein durch die Luftumströmung des Fahrzeuges während der Fahrt betätigt werden.

Auch eine Kopplung der Bewegung eines Stellelementes mit der Fahrzeuggeschwindigkeit ist möglich. Insbesondere wenn der Abschnitt der Außenhaut für die Aerodynamik des Fahrzeugs von Bedeutung ist, kann es wünschenswert sein, den Abschnitt in Abhängigkeit der Fahrzeuggeschwindigkeit verformen zu können. So entwickelt beispielsweise ein Spoiler seine Wirkung erst bei hohen Geschwindigkeiten. Bei niedrigen Geschwindigkeiten muss ein solcher Spoiler, der meist optisch nicht gerade zur Verschönerung eines Fahrzeugs beiträgt, nicht unbedingt sichtbar sein.

In einer vorteilhaften Weiterbildung ist der Abschnitt im Heckbereich eines Fahrzeugs durch mindestens ein Stellelement so verformbar, dass er einen aerodynamischen Abtrieb ähnlich wie ein Heckspoiler erzeugt. Dieser so gebildete Spoiler ist zwischen einer Ruhestellung und einer Gebrauchsstellung verlagerbar.

Das Stellelement kann gemäß einer günstigen Ausgestaltung exzentrisch gelagert sein und / oder einen elliptischen Querschnitt aufweisen, so dass die Außenhaut im Bereich des Endabschnitts der Heckklappe so verformt werden kann, dass ein aerodynamischer Abtrieb erzeugt wird.

Idealerweise wird das Stellelement in Abhängigkeit von der jeweiligen Fahrzeuggeschwindigkeit geschwenkt. Aerodynamische Aufbauten und Ausformungen der Karosserie steigern ihren Wirkungsgrad erheblich mit zunehmender Fahrzeuggeschwindigkeit. Bei niedrigen Geschwindigkeiten, wie beispielsweise im Stadtverkehr, ist die zu erzielende Wirkung sehr gering, während insbesondere bei niedrigen Geschwindigkeiten die weniger ansprechende Optik besonders gut sichtbar ist. Daher macht es Sinn, das Stellelement nur bei höheren Fahrzeuggeschwindigkeiten zu schwenken. Durch die Schwenkbewegung ist im Gegensatz zu einer translatorischen Bewegung auch der benötigte Bauraum geringer. Dadurch wird der Stauraum unter der Heckklappe weniger beeinträchtigt.

Um die Wirkung noch zu erhöhen, können idealerweise auch zwei schwenkbare Stellelemente vorgesehen sein. Diese beiden Stellelemente können entweder nebeneinander angeordnet sein, oder auf einem beweglichen Abschnitt eines ersten Stellelementes ist das zweite Stellelement angeordnet. Je nach Anordnung kann so entweder ein besonders großer Spoiler oder ein Spoiler mit besonders großem Verfahrweg dargestellt werden.

In einer günstigen Ausgestaltung ist der Spoiler und ein umgebender karosserieseitiger Bereich mit dem Abschnitt aus einem flexiblen und elastischen Material überspannt, das die Außenhaut bildet. Zwischen dem verfahrbaren Spoiler und dem umgebenden karosserieseitigen Bereich befindet sich ein Spalt. Bei bekannten Spoileranordnungen muss dieser Spalt aufwendig abgedichtet werden und stört das optische Erscheinungsbild. Durch die Überspannung des Spoilers und des umgebenden karosserieseitigen Bereichs mit dem flexiblen und elastischen Material ist weder eine Dichtung erforderlich noch wird das optische Erscheinungsbild durch einen sichtbaren Spalt getrübt. Das flexible und elastische Material bildet die Außenhaut und deckt den Spalt ab, sodass kein Wasser in diesen Spalt gelangen kann. Die Oberflächengüte und Lackierung der unter dieser Außenhaut liegenden Karosserie- und Spoilerteile muss nur wesentlich geringeren Anforderungen gerecht werden, da sie anders als bei bekannten Karosserie- und Spoilerteilen nicht die optisch sichtbare Außenhaut bilden. Dadurch können diese Teile nun mit geringerem Aufwand und damit mit geringeren Kostenimplikationen produziert werden.

Idealerweise markieren sich unabhängig von der Stellung des Spoilers keine Randabschnitte des Spoilers sichtbar in der Außenhaut aus dem flexiblen und elastischen Material. Der Höhensprung zwischen dem Spoiler in der Gebrauchsstellung und dem umgebenden karosserieseitigen Bereich wird optisch sehr ansprechend durch einen kontinuierlichen Übergangsbereich von der Außenhaut, die darüber gespannt ist, aufgelöst. Wenn der Spoiler aus seiner einen Endlage in seine andere Endlage verlagert wird, muss gewährleistet sein, dass das flexible und elastische Material, das darüber gespannt ist, auch in ausreichendem Maße dehnbar ist, sodass es diese Verlagerung auch bei großen Wegen mitmachen kann und dennoch keine Falten wirft.

Der Spoiler kann sowohl ein Front- als auch ein Heckspoiler sein. Besonders vorteilhaft bei einem Heckspoiler ist es, wenn der umgebende karosserieseitige Bereich eine konventionelle Heckklappe mit einer Aussparung für den Spoiler ist. Durch den im wesentlichen konventionellen karosserieseitigen Bereich unter der Außenhaut können wie bisher auch die Steifigkeits- und damit die Crashanforderungen erfüllt werden. Auch die Anbindung von Scharnieren und eines Schlosses kann so auf bewährte Art und Weise erfolgen. Ein weiterer Vorteil eines solchen Unterbaus besteht darin, dass auch wenn die Außenhaut aufgeschlitzt wird, keine Gegenstände aus dem darunterliegenden Kofferraum entfemt werden können.

Der Spoiler bildet in einer günstigen Ausgestaltung zumindest teilweise eine Hinterkante der Heckklappe. Zur Verbesserung der aerodynamischen Eigenschaften eines Fahrzeugs ist insbesondere die Erzeugung eines aerodynamischen Abtriebs an der Hinterachse von Bedeutung. Dafür ist eine scharfe Abrisskante an der Hinterkante der Heckklappe besonders geeignet. Eine solche scharfe Abrisskante lässt sich aber im Blech der Heckklappe nicht bzw. nur äußerst aufwendig darstellen. Dagegen kann ein Spoiler, der die Hinterkante der Heckklappe zumindest teilweise bildet, eine derartige scharfe Hinterkante aufweisen. Üblicherweise wird dabei der Spoiler nicht nur ausschließlich die scharfe Hinterkante bilden, sondern auch schmale Streifen der beiden daran angrenzenden Bereiche der Heckklappe. In einen solchen Spoiler lässt sich auch gut eine Heckleuchte im Bereich der Hinterkante integrieren. Die darüber gespannte Außenhaut muss dann im Bereich der Heckleuchte ausgespart sein.

Je nach Spoilerstellung unter dem flexiblen und elastischen Material kann das Erscheinungsbild der gesamten Heckklappe erheblich verändert werden. Wenn sich beispielsweise bei niedrigen Geschwindigkeiten der Spoiler in einer Ruhestellung befindet, kann die Heckklappe eher rundlich und mit fließenden Konturen erscheinen. Verlagert sich dagegen bei hohen Geschwindigkeiten der Spoiler aus der Ruhestellung in eine Gebrauchsstellung kann das Design der Heckklappe sich zu einem sehr sportlichen Heck mit einer scharfen Abrisskante verändern.

Das flexible und elastische Material ist idealerweise magnetisch beschichtet. Durch die magnetische Beschichtung liegt die Außenhaut haftend am Spoiler und am umgebenden karosserieseitigen Bereich an, sofern diese aus einem Eisenmetall bestehen. Dadurch kann auch bei hohen Fahrgeschwindigkeiten ein ungewolltes Flattern der Außenhaut verhindert werden.

In einer weiteren günstigen Weiterbildung ist das flexible und elastische Material zusätzlich über mindestens eine Stange gespannt, die mit einem Ende am Spoiler befestigt ist. Die Stange bewegt sich zwangsweise mit, wenn der Spoiler verlagert wird. Sie kann damit neben dem Spoiler und dem umgebenden karosserieseitigen Bereich deutlich zur Formgebung der Außenhaut und damit zur optischen Gestaltung beitragen. Dazu kann die Stange auch eine gebogene Form aufweisen, die je nach Spoilerstellung das flexible und elastische Material in einer bestimmten Form aufspannt. Damit diese Stange nicht sichtbar ist, wenn der Spoiler sich in der Ruhestellung befindet, ist im umgebenden karosserieseitigen Bereich eine Vertiefung angeordnet, in der die Stange dann zum Liegen kommt. Diese Vertiefung ist von der Außenhaut überspannt, sodass sie nicht sichtbar ist.

Da das eine Ende der Stange fest mit dem Spoiler verbunden ist, entstehen beim Verlagern des Spoilers Relativbewegungen des anderen Endes der Stange zum umgebenden karosserieseitigen Bereich. Daher ist dieses andere Ende der Stange günstigerweise mit einem Schlitten verbunden, der auf dem umgebenden karosserieseitigen Bereich verlagerbar ist. Dieser Schlitten soll als rein funktionales Bauteil möglichst nicht sichtbar sein. Dazu befindet sich der Schlitten vorteilhafterweise in einer Vertiefung im umgebenden karosserieseitigen Bereich, die von der Außenhaut überspannt ist, sodass sie von außen nicht sichtbar ist.

Die Stange kann idealerweise aus einem ähnlichen Material wie Zeltstangen bestehen, wie beispielsweise aus Fiberglas, Aluminium, Verbundmaterialen, Stahl, etc. Derartige Materialen sind leicht, robust, wetterbeständig und dennoch etwas elastisch, sodass die Gefahr eines seitlichen Ausknickens relativ gering ist. Die Stangen weisen günstigerweise eine reibungsarme Beschichtung, wie beispielsweise Teflon auf. Aufgrund der reibungsarmen Beschichtung kann die Außenhaut leicht darüber gleiten, ohne Falten zu werfen. Im Querschnitt kann das Profil rechteckig, rund, oval, tropfenförmig oder L-förmig sein.

In einer weiteren vorteilhaften Ausgestaltung der Erfindung kann der Abschnitt der Außenhaut als Seitenschweller eines Fahrzeugs durch mindestens ein Stellelement so verformbar sein, dass sich die Aerodynamik des Fahrzeugs während der Fahrt verbessert. Ein starrer Seitenschweller kann nicht aerodynamisch optimal gestaltet werden, da ansonsten der Ein- und Ausstieg der Passagiere in einem nicht akzeptablen Maße behindert werden würde. Auch die Optik eines solchen starren Seitenschwellers wäre unvereinbar mit einem ansprechenden Design. Abhilfe kann da ein verfahrbarer Seitenschweller schaffen, der im Stillstand und bei niedrigen Fahrzeuggeschwindigkeiten sich in einer Ruhestellung befindet, sodass ein müheloser Ein- und Ausstieg möglich ist. Erst bei höheren Geschwindigkeiten verlagert sich der Seitenschweller aus der Ruhestellung in eine Gebrauchsstellung, die die gewünschten aerodynamischen Effekte sicherstellt. Ferner nimmt die Verschmutzung der Fahrzeugseitenwände durch einen derartigen Seitenschweller ab, da der Schmutz bei hohen Geschwindigkeiten am Boden bzw. am Seitenschweller entlang gleitet, und nicht seitlich hoch gespritzt und gewirbelt wird.

Idealerweise ist dazu ein unter dem Abschnitt um eine Achse schwenkbar gelagertes Stellelement vorgesehen, das die Außenhaut je nach Winkelstellung unterschiedlich verformt, wobei die Achse im wesentlichen in Fahrzeuglängsrichtung verläuft. Das Stellelement kann dazu am Umfang um die Achse unterschiedliche radiale Erstreckungen aufweisen. Dies ist ein besonders einfacher Aufbau, der dennoch alle Vorteile eines verfahrbaren Seitenschwellers in sich birgt. Zudem kann der Seitenschweller über seine Längserstreckung eine variierende Kontur aufweisen, die mit dem restlichen Fahrzeug abgestimmt ist, ohne dass dafür mehrere separate Stellelemente erforderlich sind.

In einer weiteren vorteilhaften Ausführung bildet der Abschnitt eine Klappe eines Fahrzeugs, die durch das Stellelement geöffnet oder geschlossen werden kann. Eine Klappe eines Fahrzeugs soll in der geschlossenen Stellung etwas abdecken, wie beispielsweise einen Kofferraum, einen Motorraum oder einen Tankeinfüllstutzen. In der geöffneten Stellung der Klappe soll dagegen der Bereich, der zuvor abgedeckt war, möglichst mühelos und möglichst vollständig zugänglich sein.
Dazu kann beispielsweise eine Seite des Abschnitts zur Seite weggeklappt oder von einer Seite her aufgerollt werden. Alternativ kann der Abschnitt in einer günstigen Ausgestaltung einen Schlitz aufweisen, der durch das Stellelement zu einer Öffnung verbreitert werden kann. Eine derartige Klappe kann aber auch mit zwei erfindungsgemäßen Abschnitten realisiert werden. Für eine geschlossene Klappe stoßen die Ränder der beiden Abschnitte aneinander, sodass praktisch kein Spalt mehr dazwischen verbleibt. Zum Öffnen der Klappe werden die beiden Ränder relativ voneinander wegbewegt, sodass der darunter verdeckte Bereich frei zugänglich wird.

Die beiden Schlitzseiten bzw. die beiden Abschnitte an ihrer Stoßstelle sind günstigerweise durch einen Reißverschluss oder durch eine Clipsverbindung miteinander verbindbar. Dadurch ist eine sichere Verbindung bei einer geschlossenen Klappe gewährleistet. Zugleich lassen sich diese beiden Verbindungen auch schnell und mühelos aufheben, sodass die Klappe problemlos öffenbar ist. Auch eine Verriegelung lässt sich beispielsweise mit einem elektrischen Reißverschluss oder einer fremdkraftbetätigten Clipsverbindung leicht kombinieren.

Alternativ dazu kann auch entlang des Schlitzes bzw. entlang der Ränder der Abschnitte eine steife Leiste an mindestens einem Abschnitt befestigt sein, wobei mindestens eine dieser Leisten durch mindestens ein Stellelement verlagerbar ist. Durch die steife Leiste lassen sich die Schlitzseiten bzw. die Ränder in eine definierte Form bringen. Dies erleichtert ein definiertes Öffnen und Schließen der Klappe. Auch als Angriffspunkt für ein Stellelement eignen sich diese steifen Leisten gut, sodass die Klappe auch fremdkraftbetätigt geöffnet oder geschlossen werden kann.

In einer weiteren interessanten Anwendung ist der Abschnitt als Außenhaut einer Heckklappe eingesetzt, so dass diese in der Längsrichtung des Fahrzeugs längenvariabel ist, wenn durch ein Stellelement die Heckscheibe in Längsrichtung verlagert wird. Dadurch ist es möglich, je nach Anforderung den Fahrgastraum zu vergrößern, in dem die Heckscheibe nach hinten verlagert wird, oder den Kofferraum zu vergrößern, indem die Heckscheibe nach vorne verlagert wird. Dies ermöglicht eine sehr flexible Nutzung des Fahrzeugs.

Analog zur Anwendung des Abschnitts als Spoiler kann der Abschnitt idealerweise auch als Bug- oder Heckteil eines Fahrzeugs durch mindestens ein schwenkbares Stellelement in der aerodynamischen Form veränderbar sein. Als Bug- oder Heckteile sind hier Bauteile gemeint, die am vorderen bzw. hinteren Ende des Fahrzeugs sitzen, und zumindest teilweise auch den Übergang zum Fahrzeugboden darstellen, wie beispielsweise Stoßfänger. Aerodynamisch besonders wirkungsvoll sind Bug- oder Heckteile, die sich nur knapp über der Straße befinden. Derartige Bug- oder Heckteile können allerdings leicht versehentlich beschädigt werden, beispielsweise beim Ein- oder Ausparken in der Nähe von relativ hohen Randsteinen. Da derartige Bug- oder Heckteile wie alle aerodynamischen Bauteile ihre Wirkung erst bei hohen Geschwindigkeiten wirklich entfalten können, ist es sinnvoll, dass die Bug- oder Heckteile erst bei höheren Geschwindigkeiten aus einer Ruhestellung durch ein Stellelement in eine Wirkstellung verlagert werden.

In einer weiteren günstigen Anwendung ist der Abschnitt als Unterboden eines Fahrzeugs durch ein Stellelement absenkbar. Der Unterboden soll dabei eine möglichst günstige aerodynamische Form einnehmen. Wie bei allen aerodynamischen Bauteilen entsteht erst bei relativ hohen Geschwindigkeiten eine spürbare Wirkung. Daher ist es sinnvoll, erst ab einer gewissen Geschwindigkeit den Unterboden abzusenken. Da der Abschnitt dabei sowohl die Auspuffanlage inklusive Katalysator als auch ein Hinterachsgetriebe abdeckt, muss der Abschnitt sinnvollerweise auch die entsprechend hohen Temperaturen aushalten können. Ferner darf der Abschnitt auch bei Steinschlag nicht nennenswert in Mitleidenschaft gezogen werden.

In einer besonders attraktiven Anwendung ist der Abschnitt einstückig zugleich Kotflügel und Türaußenblech, wobei die Tür das Stellelement darstellt. Dadurch entfällt der Spalt zwischen Türvorderkante und angrenzendem Kotflügel. Dies verbessert erheblich das optische Erscheinungsbild.

Ebenfalls sehr wirkungsvoll ist der Einsatz des erfindungsgemäßen Abschnitts als Türaußenblech, das in der Höhe der Oberkante des eigentlichen Türkörpers durch ein Stellelement veränderbar ist. Dadurch kann die Höhe der Türbrüstung variiert werden. Je nach Lust und Wetter kann so eine besonders niedrige Türbrüstung beispielsweise bei schönem Wetter und guter Laune oder eine besonders hohe Türbrüstung bei schlechtem Wetter oder schlechter Laune gewählt werden.

Auch als Kotflügel und Radhausverkleidung kann vorteilhafterweise der erfindungsgemäße Abschnitt zum Einsatz kommen. Der Abschnitt ist dann sowohl am Fahrwerk als Stellelement als auch am Fahrzeuggerippe befestigt. Der sichtbare Spalt zwischen Rad und Radhaus kann so sehr klein gehalten werden, ohne den Federweg des Rades einzuschränken. Dies stellt eine erhebliche optische Verbesserung dar. Auch die aerodynamische Wirkung ist nicht zu unterschätzen, da das Radhaus wesentlich geschlossener ist, sodass es zu weniger unerwünschten Luftverwirbelungen kommt.

In einer sehr weit gehenden Ausführung kann der Abschnitt als Fahrzeugdach mit der Hinterkante in Längsrichtung des Fahrzeuges durch ein Stellelement verlagerbar sein. Eine derartige Ausführung ermöglicht zum einen, entweder die Größe des Fahrgastraums oder des Kofferraums zu vergrößern, zum anderen kann das optische Erscheinungsbild des gesamten Fahrzeugs erheblich verändert werden.

In einer sehr schönen und trotzdem einfachen Ausführung kann der Abschnitt durch zumindest ein. Stellelement so verformbar sein, dass je nach Position des Stellelements der Abschnitt einen Scheinwerfer und / oder einen Kühlergrill unterschiedlich weit und / oder unterschiedliche Teilbereiche des Scheinwerfers und / oder des Kühlergrills verdeckt. Abhängig von der Form der Abdeckung der Scheinwerfer kann das Fahrzeug eine ganz unterschiedliche Mimik annehmen. Wenn der Abschnitt beispielsweise die Scheinwerfer vor allem von unten abdeckt, bekommt das Fahrzeug (mit den Scheinwerfern als Augen) ein eher freundliches Antlitz. Der Abschnitt kann quasi als Augenlid dienen, und entsprechend einem menschlichen Gesicht dem Fahrzeug unterschiedliche Mimiken verleihen. Selbiges gilt auch für den Kühlergrill, der quasi der Mund- und Nasepartie in einem Gesicht entspricht.

In günstigen Weiterbildung dazu kommen zumindest zwei Abschnitte zum Einsatz, die einen Scheinwerfer oder einen Kühlergrill unterschiedlich weit und / oder unterschiedliche Teilbereiche des Scheinwerfers oder des Kühlergrills verdecken. Mit zwei oder mehr Abschnitten lässt sich der "Gesichtsausdruck" des Fahrzeugs mit noch viel mehr Nuancen modulieren. Der Gesichtsausdruck kann sowohl geschwindigkeitsabhängig, z. B. bei hohen Geschwindigkeiten sportlich, als auch abhängig von der Laune des Fahrers verändert werden.

Vorteilhafterweise kann unter dem erfindungsgemäßen Abschnitt zumindest eine Beleuchtungseinrichtung angebracht sein, die zumindest teilweise durch den Abschnitt hindurch leuchtet. Der Leuchtkörper kann dazu der Einfachheit halber direkt an dem Abschnitt befestigt sein. So können Leuchten, wie Blinker, Bremsleuchten, etc. unter dem Abschnitt verstecken. Wenn die Leuchten nicht in Betrieb sind, sind sie optisch unter der Abdeckung nicht sichtbar. Auch die Fugenproblematik und Dichtigkeitsthematik stellt sich hier nicht, da die Leuchten sich im trockenen Bereich unter dem Abschnitt befinden. Alternativ können die Leuchten aber auch dazu benutzt werden, den Abschnitt großflächig von hinten auszuleuchten. So kann beispielsweise je nach Laune des Fahrers auch die Farbe des Abschnitts verändert werden.

Der erfindungsgemäße Abschnitt kann in einer besonders einfachen Ausführung auch durch mindestens ein Stellelement verformt werden, das ein Steckelement ist, das in zumindest eine karosseriefeste Aufnahme leicht lösbar eingesteckt werden kann, und einen Teil des Fahrzeuggerippes bildet, über den der elastische Abschnitt gespannt ist. Der in Zusammenhang mit der Erfindung verwendete Begriff Stellelement schließt auch diese Steckelemente ein, die von Hand durch den Benutzer oder in der Werkstatt schnell ausgetauscht werden können. Der Querschnitt und die Form des Steckelementes sind idealerweise frei wählbar. Ähnlich wie bei dem Fahrzeug Smart kann so das Erscheinungsbild des Fahrzeugs mühelos verändert werden, in dem beispielsweise ein paar Steckelemente gegen andere mit einer anderen Form unter dem Abschnitt ausgetauscht werden. Die ganze Form und Charakteristik eines Fahrzeugs lässt sich so mit nur wenigen Handgriffen erheblich verändern.

Allgemein bekannt sind flexible Faltverdecke für Cabriolets aus textilem Gewebe. Ein derartiges Faltverdeck ist beispielsweise in der EP 0 530 134 B1 beschrieben. Dieses Verdeck weist unter anderem elastisch längendehnbare Gewebezonen aus gummielastischen Fäden auf. Die elastisch längendehnbaren Gewebezonen müssen dabei nur geringe Kräfte aufnehmen. Außerdem sind die längendehnbaren Gewebezonen so angeordnet, dass sie normalerweise verdeckt sind, also UV-Licht nicht unmittelbar ausgesetzt sind.

Wenn nun ganze Abschnitte der Außenhaut einer Fahrzeugkarosserie statt aus Blech aus einem elastischen Material gebildet werden sollen, muss dieses Material eine sehr hohe Reißfestigkeit aufweisen. Des weiteren muss das Material zur Vermeidung unerwünschter Geräusche und unerwünschter aerodynamisch verursachter Ausbeulungen und Flattererscheinungen vorgespannt angebracht werden, wobei es diese Vorspannung nie verlieren darf. Als Material, das eine hohe Reißfestigkeit aufweist und zugleich elastisch vorspannbar ist, sind die bekannten Gewebe aus gummielastischen Fäden ungeeignet, da sie die erforderlichen elastischen Dehnungen nicht realisieren.

Ein geeigneter erfindungsgemäßer Abschnitt für eine sichtbare Außenhaut einer Fahrzeugkarosserie kann aus einem flexiblen textilen Flächengebilde bestehen, das zumindest auf der sichtbaren Seite beschichtet ist. Das textile Flächengebilde stellt dabei die eigentliche tragende Schicht dar. Sie ist für die Steifigkeit, die Festigkeit und den damit verbundenen Schutz vor Vandalismus verantwortlich.

Textile Flächengebilde können Gewebe, Gewirke, Gestricke oder Vliese sein. Ein Gewebe besteht aus zwei sich rechtwinklig kreuzenden Fadensystemen, von denen die Kette (Zettel) senkrecht und der Schuss (Einschlag) waagrecht verlaufen. Die Qualität eines Gewebes hängt außer von der Fadenkreuzung ab von Material, Dicke und Art des Garns, der Appretur, Farbe, Haltbarkeit, Geschmeidigkeit, Steifheit, Festigkeit und dem Griff. Gewebe sind für strukturelle Anwendungen in der Regel nur unwesentlich dehnbar in Längs- und Querrichtung und damit für das erfindungsgemäße elastische Material weniger geeignet. Dehnbare Gewebe, die die geforderte reversible Dehnbarkeit erfüllen, können jedoch auch auf der Basis von hochdehnbaren, zum Beispiel texturfesten Garnen realisiert werden. Ein Vlies bzw. eine Matte besteht aus wirr gelegten Endlos- oder Stapelfäden. Da die Fäden dabei willkürlich zum Liegen kommen, kann ein solches textiles Gebilde unerwünschterweise in seinen Eigenschaften stark schwanken. Außerdem weist ein Vlies kein ausgeprägtes Rücksprungverhalten auf. Gewirke und Gestricke sind aus Maschen aufgebaut und werden auf Wirk- oder Strickmaschinen hergestellt. Ein Gewirke weist im Gegensatz zum Gestricke zwischen den Maschen noch zusätzliche Querverbindungen auf. Gestricke und Gewirke sind in Längs- und in Querrichtung gut dehnbar. Gewirke weisen allerdings in Längs- und Querrichtung leicht unterschiedliche Eigenschaften auf. Idealerweise ist das textile Flächengebilde daher ein Gestricke oder ein Gewirke. Bei einem Gestricke kann zusätzlich ein unidirektionaler Eintrag zur Verstärkung erfolgen, das heißt es können zusätzliche Fasern bzw. Fäden in einer oder mehreren Richtungen in das textile Gebilde eingebracht werden.

Die Elastizität des Materials wird aber nicht nur durch die textile Struktur bestimmt, sondern auch durch das Material der Fasern bzw. Fäden, aus der das textile Gebilde besteht. Um trotz der elastischen Dehnbarkeit der textilen Struktur eine sehr hohe Reißfestigkeit zu erhalten, soll die Elastizität bevorzugt ausschließlich aus der Struktur des textilen Gebildes und nicht vom Material der Fäden bzw. Fasern des textilen Gebildes kommen. Daher kommen nur relativ feste Fasern in Betracht wie beispielsweise aus Polyamid, Polyethylenteraphtalat, Polyethylen, Aramidfasem oder Stahlfasern. Fasern aus Polyamid weisen eine niedrige Lichtbeständigkeit auf und sind leicht hydrophob und teuer. Vorteilhafterweise sind die Fasern aus Polyethylenteraphtalat (PES bzw. PET). PES ist hochfest, hat eine geringe Kriechneigung und der Schrumpf ist einstellbar. Es ist gut anfärbbar und es gibt ein breites Angebotsspektrum. Die Verfügbarkeit ist hoch und die gewünschten Eigenschaften lassen sich durch Additive gut einstellen. Polyethylen dagegen ist zwar extrem fest und hochzäh, aber auch sehr teuer, hydrophob und hat einen niedrigen Schmelzpunkt sowie eine ausgeprägte Kriechneigung. Als Weiterentwicklung von PES ist PEN natürlich ebenfalls sehr geeignet. PEN hat noch etwas höhere mechanische Eigenschaften und eine geringere Kriechneigung. Aramidfasem sind extrem zäh, fest und temperaturbeständig, aber teuer, hydrophob und weisen schlechte Hafteigenschaften auf. Stahlfasern sind hochfest und zäh, sowie korrosionsbeständig. Sie sind allerdings teuer und problematisch in der Verarbeitung. Aramidfasern und Stahlfasern sind daher als alleiniges Material ungeeignet, bieten sich aber als Beimischung an, um den Schutz gegen Vandalismus des textilen Gebildes zu erhöhen.

In dem textilen Gebilde können ferner weitere Fasern eingearbeitet sein, die als Sensoren und / oder Aktuatoren dienen. So sind beispielsweise in der nicht vorveröffentlichten Patentanmeldung DE 101 10 329.8 Textilien beschrieben, in die lichtleitende Fasern eingebracht sind, die durch mindestens eine Lichtquelle beleuchtbar sind. Aus der ebenfalls nicht vorveröffentlichten Patentanmeldung DE 100 29 237.2 ist eine Sitzheizung bekannt, die sich lokal nur an den Stellen erwärmt, an denen auch tatsächlich ein Passagier den Sitz belastet. Dazu können entsprechende Drähte, die unter Druck gegenseitig einen Kontakt erzeugen in den textilen Sitzbezug miteingewebt sein.

Die Beschichtung kann wasserdicht sein und den erforderlichen Schutz vor UV-Licht bilden. Auch für Verschleiß- und Abriebbeständigkeit sowie für die Optik ist die Beschichtung zuständig. Zur Optik zählt dabei nicht nur das eigentliche Erscheinungsbild sondern auch, in wie weit Schmutz von der Beschichtung abgewiesen oder zumindest wieder leicht entfernt werden kann. Erst in der Kombination aus dem textilen Flächengebilde mit der Beschichtung können alle Anforderungen bezüglich Reißfestigkeit, Witterungsbeständigkeit, Verschleißfestigkeit und reversible elastische Vorspannbarkeit erfüllt werden.

Die Beschichtung besteht günstigerweise aus einer Klebstoffschicht, einer aromatischen Zwischenschicht und einer aliphatischen Abschlussschicht. Die Klebstoffschicht garantiert eine optimale Haftung der Beschichtung auf dem textilen Gewebe. Die aromatische Zwischenschicht stellt die Wasserdichtigkeit und UV-Beständigkeit sicher und die aliphatische Abschlussschicht erzeugt das gewünschte optische äußere Erscheinungsbild. Da das erfindungsgemäße textile Gebilde bei Fahrzeugen insbesondere Außenhautteile aus Blech substituieren soll, ist vor allem ein Erscheinungsbild gefragt, das einer lackierten Blechoberfläche ähnlich sieht. Hierzu werden Oberflächen mit unterschiedlichen Glanzgraden (matt bis hochglänzend) und mit unterschiedlichen Rauhigkeiten (glatt oder strukturiert) eingesetzt.

Weiter vorteilhafte Ausgestaltungen sind Gegenstand von Unteransprüchen.

In der Zeichnung sind mehrere Ausführungsbeispiele der Erfindung dargestellt, die

im folgenden näher beschrieben werden. Es zeigen in schematischer Darstellungsweise:
- **Fig**. 1: eine Seitenansicht eines Fahrzeugs mit mehreren erfindungsgemäßen Abschnitten, unter denen mehrere Stellelemente angeordnet sind,
- **Fig**. 2: eine Befestigung eines Randes eines erfindungsgemäßen Abschnitts an einem karosseriefesten Bauteil durch eine Clipsverbindung,
- **Fig**. 3: eine räumliche Ansicht eines Fahrzeughecks mit einem Heckspoiler,
- **Fig**. 4: eine Prinzipskizze des Heckspoilers von **Fig**. 3,
- **Fig**. 5: eine altemative Prinzipskizze des Heckspoilers von **Fig**. 3,
- **Fig**. 6: einen Prinzipschnitt durch ein Fahrzeugheck mit einem in die Außenhaut integrierten Heckspoiler in einer Ruhestellung,
- **Fig**. 7: einen Prinzipschnitt durch das Fahrzeugheck von **Fig**. 6 mit dem Heckspoiler in einer halbausgefahrenen Gebrauchsstellung,
- **Fig**. 8: einen Prinzipschnitt durch das Fahrzeugheck von **Fig**. 6 mit dem Heckspoiler in einer vollausgefahrenen Gebrauchsstellung,
- **Fig**. 9: einen Schnitt in Fahrzeuglängsrichtung durch eine Heckklappe mit einem verlagerbaren Heckspoiler,
- **Fig**. 10: eine räumliche Ansicht der Heckklappe mit Heckspoiler von **Fig**. 9 in einer perspektivischen Ansicht,
- **Fig**. 11: eine räumliche Ansicht einer Fahrzeugseite mit größenvariablem Seitenschweller,
- **Fig**. 12: eine Prinzipskizze des Mechanismus des größenvariablen Seitenschwellers von **Fig**. 11,
- **Fig**. 13: eine Seitenansicht eines Fahrzeugs mit einem verlagerbaren Seitenschweller,
- **Fig**. 14: einen Querschnitt entlang der Schnittlinie A - A durch den Seitenschweller von **Fig.** 13,
- **Fig**. 15: eine perspektivische Ansicht eines Fahrzeugs mit einer geschlossenen Motorhaube,
- **Fig**. 16: eine perspektivische Ansicht des Fahrzeugs von **Fig**. 15 mit einer geöffneten Motorhaube,
- **Fig**. 17: eine räumliche Ansicht eines Fahrzeughecks mit größenvariabler, kleiner Heckklappe,
- **Fig**. 18: eine räumliche Ansicht des Fahrzeughecks von **Fig**. 17 mit größenvariabler, großer Heckklappe,
- **Fig**. 19: eine Seitenansicht eines Fahrzeugbugs, der in seiner aerodynamischen Form veränderbar ist,
- **Fig**. 20: eine Seitenansicht eines Fahrzeuges mit gleichmäßig verlagerbarem Unterboden,
- **Fig**. 21: eine Seitenansicht eines Fahrzeuges mit ungleichmäßig verlagerbarem Unterboden,
- **Fig**. 22: eine Prinzipskizze des Mechanismus des verlagerbaren Unterbodens von **Fig**. 21,
- **Fig**. 23: eine räumliche Ansicht eines Fahrzeuges mit einem einstückigen Außenhautabschnitt, der sowohl ein Kotflügel als auch ein Türaußenblech bildet,
- **Fig**. 24: eine räumliche Ansicht eines Fahrzeuges mit einer höhenvariabler Türoberkante in der untersten Stellung,
- **Fig**. 25: eine räumliche Ansicht des Fahrzeuges von **Fig**. 24 mit der Türoberkante in einer mittleren Stellung,
- **Fig**. 26: eine räumliche Ansicht des Fahrzeuges von **Fig**. 24 mit der Türoberkante in der obersten Stellung,
- **Fig.** 27: eine Prinzipskizze des Mechanismus der höhenvariablen Türoberkante von **Fig**. 24, 25 und 26,
- **Fig**. 28: eine räumliche Ansicht eines Fahrzeuges mit einem einstückigen, bewegbaren Außenhaut-Abschnitt, der zugleich Kotflügel und Radhausverkleidung ist,
- **Fig**. 29: eine Prinzipskizze des Mechanismus von **Fig**. 28,
- **Fig**. 30: eine Seitenansicht eines Fahrzeugs mit einem verlagerbarem Dach in der hinteren Position,
- **Fig**. 31: eine Seitenansicht des Fahrzeugs von **Fig**. 30 mit dem verlagerbaren Dach in der vorderen Position,
- **Fig**. 32: eine räumliche Ansicht des Fahrzeugs von **Fig**. 30,
- **Fig**. 33: ein Scheinwerfer mit einer freundlichen Mimik,
- **Fig**. 34: der Scheinwerfer von **Fig**. 33 mit einer unfreundlichen Mimik,
- **Fig**. 35: eine Leuchte, die hinter einem erfindungsgemäßen Abschnitt angebracht ist,
- **Fig**. 36: eine Prinzipskizze eines Steckelements, über das ein Abschnitt gespannt ist,
- **Fig**. 37: eine Prinzipskizze analog zu **Fig**. 36 mit einem anderen Steckelement,
- **Fig**. 38: einen Schnitt durch ein erfindungsgemäßes Material,
- **Fig**. 39: eine Prinzipdarstellung eines Gewirkes, wie es im Material von **Fig**. 38 zum Einsatz kommt und
- **Fig**. 40: ein Kraft-Dehnungs-Diagramm des Materials von **Fig**. 38.

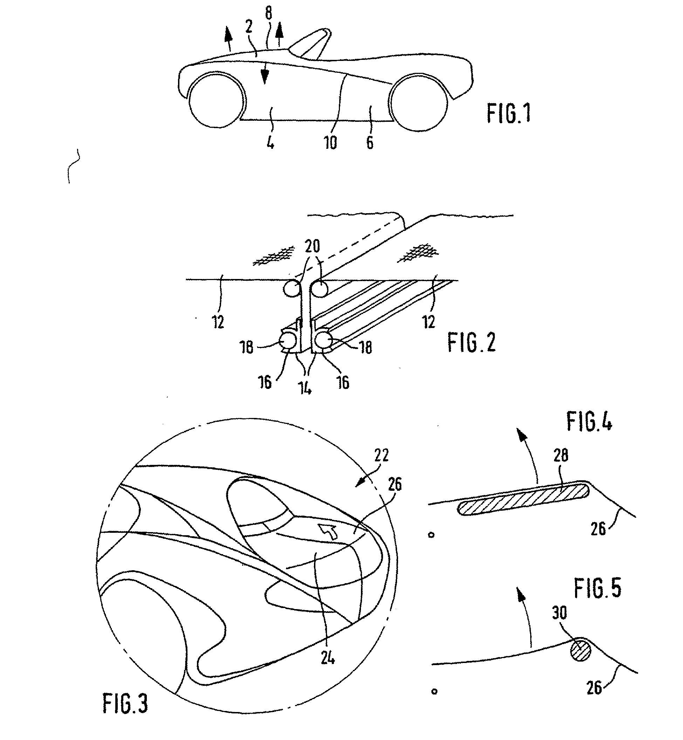

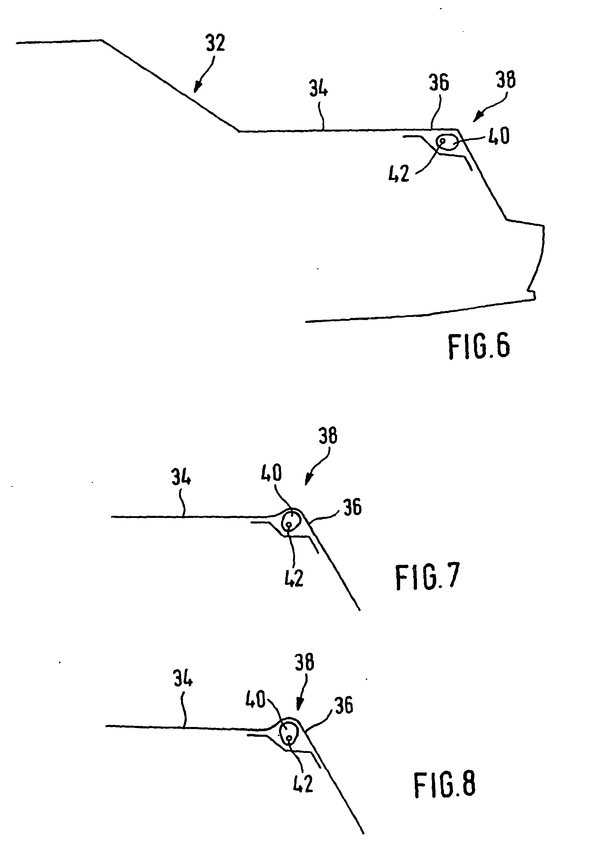

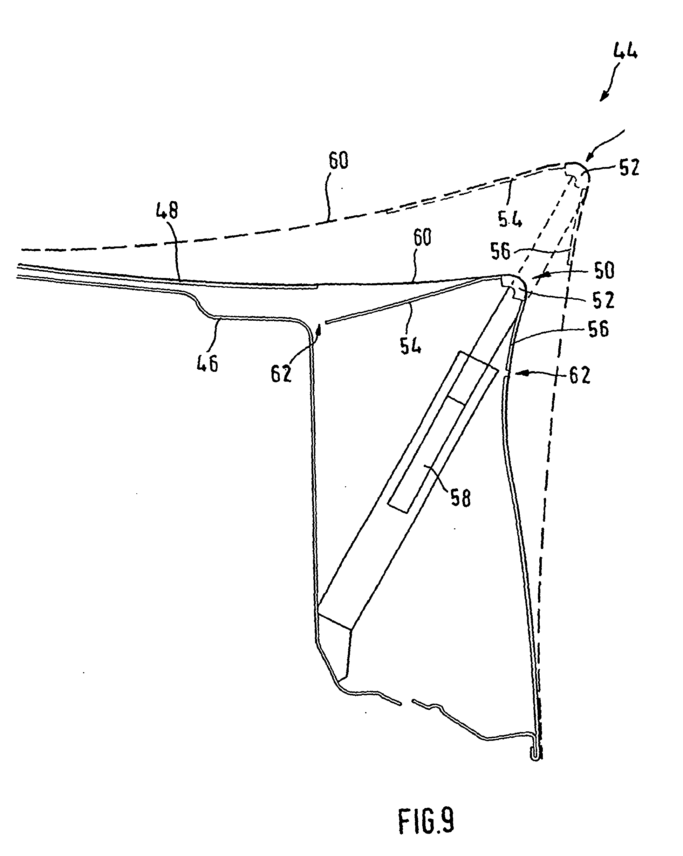

In Fig. 1 ist einen Personenkraftwagen von der Seite dargestellt. Die tragende Struktur dieses PKW wird von einem Space-frame gebildet. Über diesen Space-frame ist im Bereich der Motorhaube 2, des vorderen Kotflügels 4 und der Seitentür 6 ein flexibles und elastisches Deckmaterial gespannt, das als Beplankung dient. Die Form dieses Deckmaterials wird dabei durch das Fahrzeuggerippe vorgegeben, über das das Deckmaterial gespannt ist. Um eine möglichst ästhetische Form zu erreichen, sind neben der tragenden Struktur sogenannte Splines 8, 10 am Space-frame angebracht, über die das Deckmaterial zur Formgebung gespannt ist. Diese Splines 8, 10 sind einfache Stangen, die so gebogen sind, dass sie das Deckmaterial in der gewünschten Form aufspannen. Sie sind gegenüber der tragenden Struktur durch einen Aktuator verlagerbar und dienen so als Stellelement. So kann beispielsweise der Spline 8, der in Fahrzeuglängsrichtung die Mitte der Motorhaube 2 markiert, nach oben angehoben werden. Der Spline 10, der den Übergang zwischen Motorhaube 2 und vorderem Kotflügel 4 bildet, kann dagegen durch einen Aktuator abgesenkt und etwas nach außen verlagert werden.

So ist es möglich, bei einem fertigen Fahrzeug nur durch das Bewegen von Splines 8, 10 mit Aktuatoren das optische Erscheinungsbild des Fahrzeugs erheblich zu verändern. Diese Veränderung kann beispielsweise per Knopfdruck im Armaturenbrett ausgelöst werden, und so abhängig von der Stimmung des Fahrzeugnutzers erfolgen. Alternativ kann die veränderung auch geschwindigkeitsabhängig erfolgen, sodass ab einer gewissen Geschwindigkeit das Fahrzeug eine aerodynamisch günstigere Form oder eine sportlich anmutende Gestalt annimmt.

In dem in **Fig**. 1 gezeigten Beispiel entfällt außerdem die Fuge zwischen Motorhaube 2 und vorderem Kotflügel 3. Dies verbessert das optische Erscheinungsbild und die ansonsten erforderlichen Dichtungen zwischen Motorhaube 2 und Kotflügel 4 werden nicht mehr benötigt.

Das elastische Material muss dabei immer eine gewisse Vorspannung behalten, damit es nicht unerwünschterweise Falten wirft. Angesichts der sehr unterschiedlichen Umgebungsbedingungen, wie Temperatur, Regen, Eis, Schnee, Fahrtwind, etc. ist dafür eine relativ hohe Vorspannung erforderlich. Dennoch soll das Material am Fahrzeug auf eine Art und Weise befestigt sein, dass ein schneller Wechsel möglich ist. Idealerweise soll das Material, wenn es alt oder beschädigt ist, von jedem Fahrzeugnutzer selber gewechselt werden können. Dies würde es auch ermöglichen, die Farbe des Fahrzeugs jederzeit verändern zu können, indem einfach ein andersfarbiges Material über das Fahrzeuggerippe gespannt wird. Eine dafür geeignete Befestigung des Materials ist in **Fig**. 2 dargestellt.

Auf den Rand eines flexiblen Materials 12 ist eine Leiste 14 aus einem thermoplastischen Kunststoff aufgenäht. Am äußeren Rand weist die Leiste 14 einen C-förmigen Kanal 16 auf, mit dem sie formschlüssig auf eine Stange 18 aufgeclipst werden kann. Diese Stange 18 kann entweder direkt mit der Karosserie verbunden sein, oder über ein Stellelement relativ zur Karosserie verlagerbar sein. Diese Befestigungen sind günstigerweise so angeordnet, dass sie von außen nicht direkt sichtbar sind. Dazu kann beispielsweise das Material 12 zuvor über einen Spline 20 von der sichtbaren Fahrzeugaußenseite nach innen umgelenkt werden, und dort erst an der Stange 18 befestigt werden. Die notwendige Haltekraft der Clipsverbindung reduziert sich bei dieser Anordnung zudem um die Reibungskraft zwischen dem Material 12 und dem Spline 20.

Die Gestaltung der Fahrzeugaußenhaut durch ein derartiges flexibles bzw. elastisches Material 12 stellt auch in Verbindung mit separat verlagerbaren Außenhaut-Teilen eine sehr vorteilhafte Lösung dar. Dies wird nun anhand einer Reihe derartiger Anwendungen detailliert erläutert.

**Fig**. 3 zeigt eine räumliche Ansicht eines Fahrzeughecks 22. Im Bereich einer Heckklappe 24 besteht die Außenhaut 26 der Fahrzeugkarosserie aus einem elastischen Material, wie beispielsweise Latex. Dieses elastische Material ist über einen vom Fahrzeuggerippe gebildeten Rahmen glatt gespannt. Von außen nicht sichtbar ist unter der elastischen Außenhaut 26 ein Stellelement angeordnet. Dieses Stellelement kann aus der nicht sichtbaren Ruhestellung in eine Gebrauchsstellung durch einen elektrischen Stellantrieb verfahren werden. In der Gebrauchsstellung verformt das Stellelement elastisch von unten die Außenhaut 26 und bringt diese in einem Bereich in die Form eines Heckspoilers. Wie in einer Prinzipskizze in **Fig**. 4 dargestellt, kann dazu das Stellelement die Form einer in Fahrzeugrichtung vorne drehbar angelenkten Klappe 28 haben. In der gezeigten durch einen Aktuator leicht nach oben geklappten Gebrauchsstellung der Klappe 28 wird die Außenhaut 26 im hinteren Bereich der Heckklappe 24 deutlich nach oben elastisch verformt. Die so verformte Außenhaut 26 erzeugt wie ein Heckspoiler einen aerodynamischen Strömungsabriss und reduziert so den Auftrieb an der Fahrzeughinterachse.

Alternativ zu der Ausführung des Stellelementes als Klappe 28, wie in **Fig**. 4 dargestellt, ist auch eine Ausführung als Bügel 30 möglich, wie es schematisch im Schnitt in **Fig**. 5 dargestellt ist. Dabei wird ein einfacher Bügel 30, der beispielsweise aus einem gebogenen Rohr besteht, aus einer Ruhestellung in eine Gebrauchsstellung nach oben verschwenkt.

**Fig**. 6 zeigt eine weitere Variante, wie ein derartiger Heckspoiler an einem Fahrzeugheck 32 realisiert sein kann. Im Bereich einer Heckklappe 34 besteht die Außenhaut 36 aus einem elastischen Material. Dieses elastische Material ist über einen vom Fahrzeuggerippe gebildeten Rahmen glatt gespannt. Von außen nicht sichtbar ist unter der elastischen Außenhaut 36 im Bereich des Endabschnitts der Heckklappe 34 ein elektrisch angetriebenes Stellelement 40 angeordnet. Das Stellelement 40 hat einen elliptischen Querschnitt und ist jeweils seitlich um eine Achse 42 schwenkbar exzentrisch gelagert. In der dargestellten Ruhelage berührt das Stellelement 40 die elastische Außenhaut 36 nicht. Das Stellelement 40 wird erst bei Fahrzeuggeschwindigkeiten ab 120 km/h proportional zur Fahrzeuggeschwindigkeit verlagert.

In **Fig**. 7 ist eine Zwischenstellung des Stellelementes 40 dargestellt, die in etwa einer Fahrzeuggeschwindigkeit von 160 km/h entspricht. Das Stellelement 40 drückt am Endabschnitt 38 der Heckklappe 34 die Außenhaut 36 mit seinem Exzenter bereits deutlich erkennbar nach oben. Es verformt elastisch von unten die Außenhaut 36 und bringt diese im Endbereich der Heckklappe 34 in die Form eines Heckspoilers. Die so verformte Außenhaut 36 bildet eine Abrisskante, die einen aerodynamischen Strömungsabriss erzeugt und so den aerodynamischen Auftrieb an der Fahrzeughinterachse reduziert.

**Fig**. 8 zeigt das Stellelement 40 in der maximal nach oben verschwenkten Stellung, die bei der Fahrzeughöchstgeschwindigkeit erreicht wird. In dieser Stellung wird die elastische Außenhaut 36 gegenüber der Ruhestellung um ca. 25 mm nach oben im Endabschnitt 38 der Heckklappe 34 ausgebeult.

Die Außenhaut 36 ist in allen Stellungen des Stellelementes 40 aufgrund ihrer Elastizität glatt gespannt. Eine derartige Integration der Funktionalität eines Heckspoilers stört das Design nicht und ist mechanisch weniger aufwendig, als klassische ausfahrbare Heckspoiler, wie sie beispielsweise von derzeitigen Fahrzeugen her bekannt sind. Auch der benötigte Bauraum ist deutlich geringer, als dies bei konventionellen Heckspoilern der Fall ist. Es gibt keine sichtbaren Spalte zwischen dem Spoiler und der Heckklappe und auch die Abdichtungsthematik der Spalte entfällt, da alle diese Bereiche mit der wasserdichten Außenhaut 36 überspannt sind.

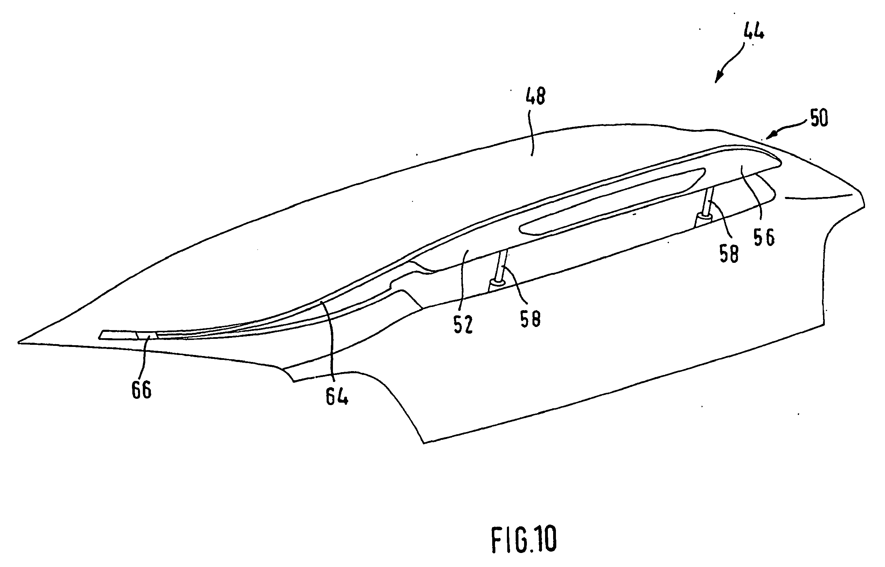

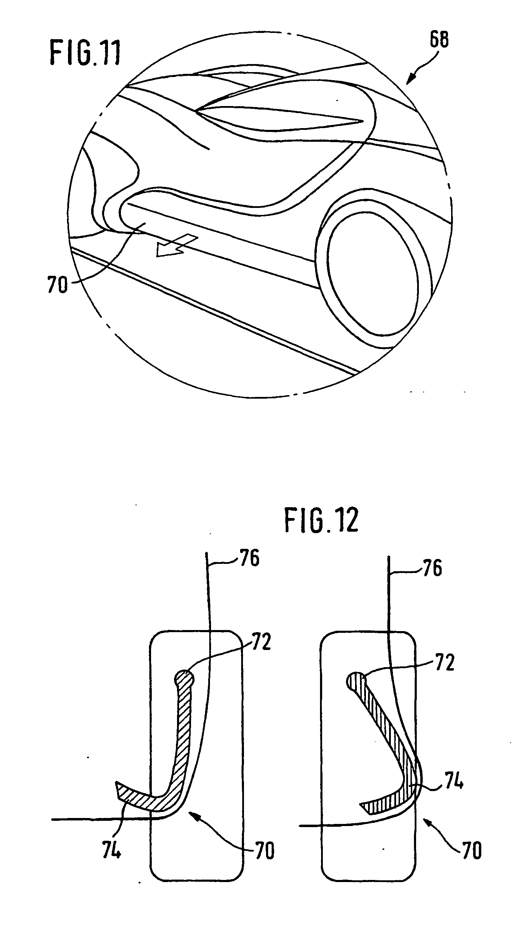

In Fig. 9 ist noch eine Variante für einen derartigen Heckspoiler dargestellt. Die gezeigte Heckklappe 44 in Schalenbauweise weist ein Innenblech 46 und ein Außenblech 48 auf. Das Außenblech 48 ist im Bereich der Hinterkante 50 ausgespart und durch einen Spoiler 52 als Stellelement ersetzt worden. Der Spoiler 52 bildet mit einem Stahlblech zum einen die scharfe Hinterkante 50 und zum anderen jeweils einen schmalen Streifen 54 und 56 der an die Hinterkante 50 angrenzenden Bereiche. Der Spoiler 52 ist über zwei pneumatische Zylinder 58 aus der Ruhestellung in eine gestrichelt gezeigte Gebrauchsstellung linear verlagerbar. Denkbar wäre auch ein elektrischer oder hydraulischer Antrieb für den Spoiler 52. Der gesamte gezeigte Bereich der Heckklappe 44 inklusive dem Spoiler 52 ist mit einem elastischen Gewebe 60 überspannt. Es überspannt dabei Spalte 62 zwischen Spoiler 52 und Außenblech 48, sodass diese von außen nicht sichtbar sind. Das Gewebe 60 hat eine magnetische Beschichtung, wodurch es auf dem Außenblech 48 der Heckklappe 44 und auf dem Stahlblech 50, 54 und 56 des Spoilers 52 soweit als möglich haftend anliegt. Das Gewebe 60 hat außerdem eine Beschichtung auf der sichtbaren Seite, die von der Struktur her wie ein Blech ausschaut. Diese Beschichtung kann entweder exakt die Farbe des restlichen Fahrzeugs aufweisen, oder aber auch bewusst zur Akzentuierung in einer anderen Farbe gehalten sein.

Die sichtbare Außenhaut wird durch das Gewebe 60 gebildet, sodass das darunter liegende Außenblech 48 weder die Oberflächengüte noch die Lackierqualität eines normalen Außenblechs aufweisen muss. Es genügt sogar, wenn das Außenblech 48 zur Verhinderung von Korrosion nur grundiert ist. Desweiteren sind keine aufwendigen Dichtkonzepte erforderlich, um zu verhindern, dass Wasser in die Spalte 62 eindringen kann.

Das Außenblech 48 und das Stahlblech 50, 54 und 56 des Spoilers 52 sind so gestaltet, dass in jeder Stellung des Spoilers 52 das Gewebe 60 so gespannt wird, dass sich keine Kanten in der Außenhaut markieren. Dazu liegt in der Ruhestellung des Spoilers 52 das Gewebe 60 oben auf der Heckklappe 44 nur am Außenblech 48 und an der Hinterkante 50 des Spoilers 52 an. Der vom Spoiler 52 gebildete Streifen 54 wird frei überspannt. Das Gewebe 60 bildet quasi eine Verlängerung des Außenblechs 48 zur Hinterkante 50 hin. In der Gebrauchsstellung des Spoilers 52 dagegen liegt das Gewebe 60 an der Hinterkante 50 und dem daran angrenzenden Streifen 54 an. Es überspannt frei den an den Spalt 62 angrenzenden Bereich des Außenblechs 48 und bildet so quasi eine Verlängerung des Streifens 54. Analog verhält es sich auch an der Hinterseite der Heckklappe 44.

In **Fig**. 10 ist die Heckklappe 44 mit dem Spoiler 52 in der Gebrauchsstellung ohne die Außenhaut aus dem Gewebe 60 dargestellt. In der Hinterkante 50 des Spoilers 52 ist eine Stange 64 aus Teflon geführt, die links und rechts seitlich über den Spoiler 52 hinausragt und eine Verlängerung der Hinterkante 50 bildet. Diese Stange 64 ist links und rechts symmetrisch nach vorne gebogen und verläuft flach auf dem Außen blech 48. Da die Stange 64 fest mit dem Spoiler 52 verbunden ist, entstehen beim Verlagem des Spoilers Relativbewegungen der freien Enden der Stange 64 zum Außenblech 48. Daher sind diese freien Enden der Stange 64 jeweils mit einem Schlitten 66 verbunden, der auf bzw. in der Heckklappe 44 verlagerbar ist. Da die Schlitten 66 optisch nicht gerade eine Zierde sind, sind sie in einer Vertiefung im Außenblech 48 angeordnet. Diese Vertiefungen mit den darin angeordneten Schlitten 66 sind aufgrund der Überspannung der Heckklappe 44 mit dem Gewebe 60 nicht sichtbar. Die Stange 64 dient der Formgebung des Gewebes 60, wenn der Spoiler 52 sich nicht in der Ruhestellung befindet. Wie bei einem Zelt spannt die Stange 64 das Gewebe 60 in einer ästhetisch ansprechenden Form auf. Auf diese Weise kann die Heckklappe 44 je nach Stellung des Spoilers 52 unterschiedliche Formen annehmen.

In der Ruhestellung des Spoilers 52 soll die Stange 64 das Gewebe 60 nicht verformen. Dazu ist im Außenblech 48 links und rechts des Spoilers 52 jeweils eine Vertiefung vorgesehen, in der die Stange 64 zum Liegen kommt, wenn sich der Spoiler 52 in der Ruhestellung befindet. Diese Vertiefungen sind durch das Gewebe 60 überspannt, sodass sie nicht sichtbar sind.

Der Spoiler 52 wird beim Überschreiten einer Fahrzeuggeschwindigkeit von ca. 80 km/h aus der Ruhestellung in die Gebrauchsstellung verlagert. Umgekehrt wird er allerdings erst beim Unterschreiten einer Fahrzeuggeschwindigkeit von ca. 50 km/h wieder eingefahren, da in der dazugehörigen Steuerung eine Schalthysterese berücksichtigt wird.

Neben einer Anwendung dieses flächigen und flexiblen Abschnitts einer Außenhaut eines Fahrzeugs im Bereich eine Heckspoilers bietet sich auch der Einsatz im Bereich eines Seitenschwellers an.

In **Fig**. 11 ist eine räumliche Ansicht einer Fahrzeugseite 68 mit größenvariablem Seitenschweller 70 dargestellt, der mit einem elastischen Material 76 überspannt ist. Bei hohen Fahrzeuggeschwindigkeiten kann ein Aktuator den Seitenschweller 70 seitlich so elastisch verformen, dass dieser breiter wird und so eine aerodynamisch optimalere Form annimmt. Da dieser ausgefahrene Seitenschweller 70 beim Ein-und Aussteigen aus dem Fahrzeug hinderlich sein würde, wird er nur bei hohen Fahrzeuggeschwindigkeiten ausgefahren. Der dazugehörige Mechanismus ist schematisch in **Fig**. 12 abgebildet. Ein drehbar mit einem Scharnier 72 gelagertes, schwellerförmig gebogenes Blechteil 74 ist als Stellelement unter dem elastischen Material 76 in einer nicht sichtbaren Ruhestellung angeordnet, wie es in der linken Bildhälfte gezeigt ist. Wenn dieses schwellerförmig gebogene Blechteil 74 durch einen hier nicht dargestellten elektrischen Aktuator nach außen verschwenkt wird, drückt es sich seitlich in das elastische Material 76, das den Seitenschweller 70 bildet, hinein, und markiert sich deutlich mit seiner Form auf der Vorderseite des Materials 76, wie es in der rechten Bildhälfte gezeigt ist.

Eine alternative Ausführung eines solchen Seitenschwellers ist in den Fig. 13 und 14 dargestellt. In **Fig**. 13 ist ein Personenkraftwagen von der Seite gezeigt. Der PKW weist einen ausgeprägten Seitenschweller 78 auf, der sich in Fahrzeuglängsrichtung zwischen dem vorderen und dem hinteren Rad erstreckt. Der Seitenschweller 78 ist mit einem elastischen Material überspannt, das die sichtbare Außenhaut bildet. An die jeweilige Fahrzeuggeschwindigkeit angepasst kann der Seitenschweller 78 mehrere unterschiedliche Formen annehmen. Die Funktionsweise des Seitenschwellers 78 ist im Schnitt A - A in **Fig.** 14 ersichtlich. Der Seitenschweller 78 besteht aus einer Welle 80, die sich in Fahrzeuglängsrichtung erstreckt und die elektrisch angetrieben (als Stellelement) unterschiedliche Winkelstellungen einnehmen kann. Parallel zur Welle 80 sind drei Stangen 82, 84, 86 auf der Welle 80 jeweils um 120° zueinander versetzt angebracht. Jede Stange 82, 84, 86 weist einen unterschiedlich großen Abstand zur Welle 80 auf. Von der Winkelstellung der Welle 80 hängt ab, welche der drei Stangen 82, 84, 86 das elastische Material im Bereich des Seitenschwellers 78 verformt und somit die Form des Seitenschwellers 78 vorgibt. Wenn es beispielsweise die Stange 82 mit dem größten Abstand zur Welle 80 ist, dann wird das elastische Material sehr stark verformt und der Seitenschweller 78 tritt optisch sehr deutlich zutage.

Eine Außenhaut aus einem elastischen Material kann auch für Fahrzeugklappen verwendet werden. Dies ist im folgenden anhand der **Fig**. 15 und 16 beispielhaft erläutert. **Fig**. 15 zeigt eine Motorhaube 88 eines Personenkraftwagens im geschlossenen Zustand. In der Mitte ist die Motorhaube 88 in Fahrzeuglängsrichtung in zwei Abschnitte 90 und 92 aus einem elastischen Material unterteilt. Die beiden Abschnitte 90 und 92 sind mit einem elektrischen Reißverschluss 94 als Stellelement miteinander verbunden. Zum Öffnen muss nur der elektrische Reißverschluss 94 geöffnet werden. Dann können - wie es in **Fig**. 16 gezeigt ist - die beiden Abschnitte 90 und 92 vom Reißverschluss 94 her auseinander gezogen werden, sodass der darunter liegende Bereich zugänglich wird.

Eine andere Anwendung ist in den **Fig**. 17 und 18 dargestellt. Sie zeigen eine in Längsrichtung des Fahrzeugs längenvariable Heckklappe 96 aus einem elastischen Material. **Fig**. 17 zeigt eine räumliche Ansicht eines Fahrzeughecks 98. Die dargestellte Heckscheibe 100 ist in Fahrzeuglängsrichtung als Stellelement verschiebbar und befindet sich in der hinteren Endposition. In dieser Position ist die Heckklappe 96 am kürzesten. Dennoch hängt das flexible Material, aus dem die Heckklappe 96 gebildet ist, nicht durch, sondern ist immer noch leicht gespannt, da es aufgrund seiner elastischen Eigenschaften sich soweit zusammenziehen kann. In **Fig**. 18 ist das gleiche Fahrzeugheck 98 dargestellt, allerdings befindet sich die Heckscheibe 100 in der vorderen Endposition. Hierbei ist die Heckklappe 96 am längsten. Das elastische Material der Heckklappe 96 ist am stärksten gespannt. So kann je nach Bedarf entweder der Kofferraum oder der Platz in der Fahrgastzelle für Fondpassagiere vergrößert werden.

Auf einem ähnlichen Konzept basierend wie der Seitenschweller von **Fig**. 11 und 12 sind auch in der aerodynamischen Form veränderbare Bug- oder Heckteile realisierbar. Zur Veranschaulichung ist in **Fig**. 19 ein Fahrzeugbug 102 von der Seite gezeigt. Bei hohen Fahrzeuggeschwindigkeiten senkt sich durch den Fahrtwind betätigt der Fahrzeugbug 102 in eine aerodynamisch optimalere Form nach unten ab. Auch hier ist ein drehbar an einem Scharnier 104 gelagertes, bugförmig gebogenes Blechteil 106 als Stellelement unter dem elastischen Material 110 in einer nicht sichtbaren Ruhestellung angeordnet. Wenn dieses bugförmig gebogene Blechteil 106 durch den Winddruck 108 in die untere Gebrauchsstellung verschwenkt wird, drückt es sich unten in das elastische Material 110, das den Fahrzeugbug 102 bildet, hinein, und markiert sich deutlich mit seiner Form auf der Außenseite des Materials 110.

Ebenfalls leicht realisierbar ist so ein absenkbarer Unterboden eines Fahrzeuges, der zumindest teilweise aus einem flexiblen Material besteht. Dafür gibt es mindestens zwei unterschiedliche Wirkmechanismen. Bei dem ersten in **Fig**. 20 dargestellten Mechanismus wird im wesentlichen über die ganze Fahrzeuglänge der Unterboden 112 gleichmäßig abgesenkt. Dabei besteht der eigentliche Unterboden aus einem festen Material 114, aber die Anbindung des Unterbodens an die Karosserie erfolgt umlaufend mit einem elastischen Material 116. Bei dem zweiten in **Fig**. 21 gezeigten Mechanismus wird der Unterboden 112 im Bereich der Fahrzeugmitte deutlich stärker abgesenkt und bildet so eine Form ähnlich einer Unterseite eines Flugzeugflügels 118. Dazu besteht der Unterboden 112 aus einem nur geringfügig flexiblen Material 116, da anderenfalls der Unterboden 112 unerwünschterweise flattern würde. Dieses geringfügig flexible Material 116 erlaubt genau die Verformung des Unterbodens 112 zwischen der plattenartigen, am Fahrzeugboden anliegenden und der flügelartigen, nach unten abgesenkten Form. Der dazugehörige Mechanismus ist in einer Prinzipskizze in **Fig**. 22 gezeigt. Das hintere Ende des flexiblen Unterbodens 112 besteht aus einem steifen Stab 120, der links und rechts in einer Kulisse 122 geführt ist. Durch einen hier nicht dargestellten elektrischen Aktuator kann der steife Stab 120 und damit das hintere Ende des Unterbodens 112 in der Kulissenführung 122 aus der im oberen Bildabschnitt gezeigten hinteren Stellung nach vorne gedrückt werden, wie es im unteren Bildabschnitt dargestellt ist. Da das vordere Ende des. Unterbodens 112 fest an der Tragstruktur des Fahrzeuges befestigt ist, und der Unterboden 112 in der Länge nicht veränderbar ist, senkt er sich in der Mitte ab, wenn das hintere Ende mit dem Stab 120 nach vorne verlagert wird.

**Fig**. 23 zeigt eine optisch sehr schöne Anwendung. Die ganze Außenhaut 124 eines Kotflügels 126 und einer Fahrzeugtür 128 ist einstückig aus elastischem Material ausgeführt. Dadurch ist außen kein Spalt mehr zwischen Kotflügel 126 und Fahrzeugtür 128 in der Außenhaut 124 notwendig. Auch die sonst für diesen Spalt erforderliche Abdichtung des Spaltes kann entfallen. Der Spalt ist mit demselben elastischen Material überdeckt, aus dem die Außenhaut 124 des Kotflügels 126 und der Fahrzeugtür 128 besteht. Beim Öffnen der Fahrzeugtür 128 kann das elastische Material über dem Spalt sich soweit zusammenziehen, dass das Material, ohne Falten zu werfen, leicht gespannt den Spalt verdeckt. Beim Schließen der Fahrzeugtür 126 wird das elastische Material über dem Spalt wieder soweit gedehnt, dass es gespannt den Spalt überdeckt ohne zu reißen. Zur optimalen Formgebung kann die elastische Außenhaut 124 noch zusätzlich durch einen Stab 130 gestützt werden, der vom Kotflügel 126 über den Spalt in die Fahrzeugtür 128 hinein verläuft. Dieser Stab 130 hat in der Mitte einen elastischen Abschnitt 132, der die notwendigen Bewegungen im Bereich des Spaltes beim Öffnen und Schließen der Fahrzeugtür 128 mitmachen kann.

Die **Fig**. 24 bis 26 zeigen jeweils eine räumliche Ansicht eines Fahrzeuges 134 mit einer Fahrzeugtür 136, deren Oberseite 138 in der Höhe veränderbar ist. In **Fig**. 24 befindet sich die Oberseite 138 der Fahrzeugtür in der untersten Stellung, in **Fig**. 25 in der mittleren Stellung 138' und in **Fig**. 26 in der obersten Stellung 138". Dazu besteht die Außenhaut 140 der Fahrzeugtür 136 aus elastischem Material. Unter dieser Außenhaut 140 verdeckt ist an der Oberseite 138, 138', 138" der Fahrzeugtür 136, wie in **Fig**. 27 in einem Prinzipschnitt durch die Fahrzeugtür 136 gezeigt, ein Stellelement angeordnet. Dieses Stellelement ist in Form einer Klappe 142 drehbar an der dem Fahrzeuginneren zugewandten Kante der Oberseite 138, 138', 138" mit einem Scharnier 144 angelenkt, wie es im linken Bildabschnitt dargestellt ist. Durch einen hier nicht abgebildeten pneumatischen Aktuator kann die Klappe 142 um das Scharnier 144 nach oben verschwenkt werden, wie es im rechten Bildabschnitt gezeigt ist. Da die Klappe 142 mit der elastischen Außenhaut 140 überspannt ist, verlagert sich mit der Klappe 142 auch die Oberseite 138, 138', 138" der Außenhaut 140 der Fahrzeugtür 136 nach oben oder nach unten. So kann je nach Gemütslage des Fahrers das Fahrzeug einen eher offenen oder einen eher geschlossenen Gesamteindruck vermitteln.

**Fig**. 28 zeigt eine Anwendung einer elastischen Außenhaut an einer Radhausverkleidung 146. Aufgrund der Elastizität der Außenhaut ist es möglich, den Federweg der Radaufhängung nicht komplett in der Radhausverkleidung 146 vorhalten zu müssen. Das elastische Material der Radhausverkleidung 146 ist einerseits mit einem festen Kotflügel 148 verbunden, andererseits mit der Radaufhängung. Dadurch kann die Radhausverkleidung 146 sehr nahe am eigentlichen Reifen 150 angebracht werden. Die genaue Funktionsweise wird aus dem Prinzipschnitt in Fig. 29 ersichtlich. Um den Reifen 150 herum ist im oberen Bereich eine feste Verkleidung 152 an der Radaufhängung 154 angebracht. Der Bereich zwischen der äußeren Kante dieser Verkleidung 152 und dem Kotflügel 148 ist mit der Radhausverkleidung 146 aus dem elastischen Material überbrückt. Dieses elastische Material ist aufgrund seiner Vorspannung immer glatt gespannt, auch wenn je nach Durchfederung des Reifens 150 die Radaufhängung 154 und damit die Verkleidung 152 in der links gezeigten tiefst- oder rechts gezeigten höchstmöglichen Position ist.

Auch Anwendungen im Dachbereich sind möglich. **Fig**. 30 zeigt eine Seitenansicht eines Fahrzeuges 156 mit einem variablen Verdeck 158 aus elastischem Material in der hinteren Position. In **Fig**. 31 ist das gleiche Verdeck 158' in der vorderen Position abgebildet. Die untere Hinterkante des Verdecks 158' ist in Fahrzeuglängsrichtung verlagerbar. Aufgrund der Elastizität des Materials kann so der Fahrgastraum unter dem Verdeck 158, 158' in der Größe variiert werden. In **Fig**. 32 ist zur Verdeutlichung eine räumliche Ansicht des Fahrzeugs 156 von Fig. 30 mit dem Verdeck 158' in der vorderen Position gezeigt.

Eine weniger spektakuläre aber sehr wirkungsvolle Anwendung ist bei Scheinwerfern möglich. In **Fig**. 33 sind zwei nebeneinander angeordnete Scheinwerfer 160 gezeigt, die jeweils von oben und von unten teilweise von einem Abschnitt 162 bzw. 164 aus einem flexiblen Material verdeckt sind. Wenn nun die Vorderansicht des Fahrzeugs mit den solchen Scheinwerfern 160 als Gesicht betrachtet wird, entsprechen die Scheinwerfer 160 den Augen. Die beiden Abschnitte 162 und 164 decken in **Fig.** 33 die Scheinwerfer 160 teilweise so ab, dass es erscheint, als ob das "Auge" lacht. Durch Stellelemente können die Abschnitte 162 und 164 aber auch so verlagert werden, dass sie die Scheinwerfer 160 so verdecken, dass sie ein unfreundliches Antlitz wie in **Fig**. 34 bekommen. Diese Veränderung der Fahrzeugmimik kann wiederum beispielsweise vom Fahrzeug-innenraum in Abhängigkeit der Stimmung des Fahrzeugnutzers gesteuert werden.

Eine Außenhaut eines Fahrzeugs, die von einem flexiblen bzw. elastischen Material gebildet wird, bietet noch weitere grundsätzliche Möglichkeiten zur Individualisierung des Fahrzeugs. So kann wie in Fig. 35 gezeigt, unter dem Material 166 eine Leuchte 168 angeordnet sein. Diese Leuchte 168 scheint zumindest teilweise durch das Material 166 nach außen hindurch, wenn sie eingeschaltet ist. Das Material 166 sollte dazu zumindest im Bereich der Leuchte 168 relativ transparent sein, damit die erforderliche Leuchtstärke nach außen hin erreicht wird. So können beispielsweise Blink- oder Bremsleuchten realisiert werden, die von außen nur sichtbar sind, wenn sie eingeschaltet sind. So entstehen keine Spalte und es sind keine Dichtungen notwendig zwischen den Leuchten 168 und der angrenzenden Karosserie.

Denkbar ist aber auch eine sogenannte Ambientebeleuchtung. Die Leuchte 168 oder Leuchten scheinen nicht punktuell stark durch das Material 166 durch, sondern beleuchten es großflächig von hinten. So kann das Fahrzeug beispielsweise im Dunkeln eine schwach leuchtende Außenhaut in der Farbe der jeweiligen Leuchte 168 aufweisen.

Bei allen bisherigen Anwendungen waren aktiv verfahrbare Stellelemente vorgesehen. An manchen Stellen bietet es sich an, dass die Stellelemente als Steckelemente ausgeführt sind. Derartige Steckelemente sind Splines 170, die wie in **Fig**. 36 gezeigt in karosserieseitige Aufnahmen 172 eingesteckt werden können, und auch leicht wieder aus der Aufnahme 172 herausgenommen werden können. Auf diese Weise kann, wenn das flexible Material 174 gerade abgenommen ist und nicht über diesen Spline 170 gespannt ist, der Spline 170 durch einen anderen ersetzt werden. In **Fig**. 37 ist die Anordnung von **Fig**. 36 mit einem anderen Spline 170' abgebildet. Die Splines 170 und 170' bestehen dabei zum einen aus einem Steckfuß, mit dem sie in die Aufnahme 172 eingesteckt werden können, und einem formgebenden Teil. Dieser formgebende Teil kann auch aus formgebenden flächigen Blechen oder mehreren miteinander verbundenen Stangen bestehen.

Viele weitere, hier nicht gezeigte Anwendungen sind denkbar, wie beispielsweise als Überrollschutz, Crashzonen, die abhängig von der Fahrzeuggeschwindigkeit ausfahren, und Kotflügel bzw. Radhäuser, die die Lenkbewegung der Vorderräder mitmachen. Maßgeblich für die Realisierbarkeit all dieser Anwendungen ist aber die Verfügbarkeit eines geeigneten elastischen Materials.

In **Fig**. 38 ist ein solches elastisches Material dargestellt, das aus einer mittleren Schicht 176 besteht, die aus einem Gewirke aus Fasern aus PES besteht. Die mittlere Schicht 176 weist eine obere und eine untere Beschichtung 178 und 180 auf. Die obere Beschichtung 178 erzeugt die gewünschte Optik, die der eines lackierten Außenhautblechs einer Kraftfahrzeugkarosserie sehr nahe kommt. Die obere Beschichtung 178 ist mit einer Klebstoffschicht mit der mittleren Schicht 176 verbunden. Die eigentliche obere Beschichtung 178 besteht aus einem Polyurethanschaum, der die erforderliche Wasserdichtheit, den UV-Schutz und den sonstigen Medienschutz sicherstellt. Auf der Oberseite 182 der oberen Beschichtung 178 ist eine dünne aliphatische Abschlussschicht aufgebracht, die die gewünschte Verschleißfestigkeit und Alterungsbeständigkeit gewährleistet. Die untere Beschichtung 180 ist genauso wie die obere Beschichtung 178 aufgebaut. Allerdings ist in der unteren Beschichtung 180 ein magnetisches Pulver miteingebracht, sodass das elastische Material an ferromagnetischen Bauteilen sicher anliegt.

Wie in Fig. 39 gut zu sehen ist, besteht die mittlere Schicht 176 aus einem Gewirke mit gleichmäßig angeordneten Maschen 184. Derartige Gewirke lassen sich ohne großen Aufwand mit kurzen Rüstzeiten darstellen.

Dieses elastische Material verhält sich bei Belastung gemäß dem in **Fig**. 40 gezeigten Kraft-Dehnungs-Diagramm. Darin ist gut zu sehen, dass das Material um fast 30 % in der textilen Struktur gedehnt werden kann, bevor die Fasern sich längen. Um dabei ein Rückstellverhalten möglichst ohne Hysterese zu erreichen, wurde das Material vorgereckt, sodass sich das Material möglichst bereits vor dem Einsatz gesetzt hat. Mit einem solchen Material lassen sich bei Dicken von ca. 1,7 mm Festigkeiten von bis zu 2000 N / 5 cm erreichen.

### Bezugszeichenliste

- 2: Motorhaube
- 4: Vorderer Kotflügel
- 6: Seitentür
- 8: Spline
- 10: Spline
- 12: Flexibles Material
- 14: Leiste
- 16: C-förmiger Kanal
- 18: Stange
- 20: Spline
- 22: Fahrzeugheck
- 24: Heckklappe
- 26: Elastische Außenhaut
- 28: Klappe
- 30: Bügel
- 32: Fahrzeugheck
- 34: Heckklappe
- 36: Elastische Außenhaut
- 38: Endabschnitt
- 40: Stellelement
- 42: Achse
- 44: Heckklappe
- 46: Innenblech
- 48: Außenblech
- 50: Hinterkante
- 52: Spoiler
- 54: Streifen
- 56: Streifen
- 58: Pneumatischer Zylinder
- 60: Gewebe
- 62: Spalt
- 64: Stange
- 66: Schlitten
- 68: Fahrzeugseite
- 70: Seitenschweller
- 72: Scharnier
- 74: Blechteil
- 76: Elastisches Material
- 78: Seitenschweller
- 80: Welle
- 82: Stange
- 84: Stange
- 86: Stange
- 88: Motorhaube
- 90: Abschnitt
- 92: Abschnitt
- 94: Reißverschluss
- 96: Längenvariable Heckklappe
- 98: Fahrzeugheck
- 100: Heckscheibe
- 102: Fahrzeugbug
- 104: Scharnier
- 106: Blechteil
- 108: Winddruck
- 110: Elastisches Material
- 112: Unterboden
- 114: Festes Material
- 116: Flexibles Material
- 118: Flugzeugflügel
- 120: Stab
- 122: Kulissenführung
- 124: Außenhaut
- 126: Kotflügel
- 128: Fahrzeugtür
- 130: Stab
- 132: Elastischer Abschnitt
- 134: Fahrzeug
- 136: Fahrzeugtür
- 138: Oberseite der Fahrzeugtür
- 140: Elastische Außenhaut
- 142: Klappe
- 144: Scharnier
- 146: Radhausverkleidung
- 148: Kotflügel
- 150: Reifen
- 152: Verkleidung
- 154: Radaufhängung
- 156: Fahrzeug
- 158: Verdeck
- 160: Scheinwerfer
- 162: Abschnitt
- 164: Abschnitt
- 166: Material
- 168: Leuchte
- 170: Spline
- 172: Aufnahme
- 174: Flexibles Material
- 176: Mittlere Schicht
- 178: Obere Beschichtung
- 180: Untere Beschichtung
- 182: Oberseite
- 184: Maschen

## Patentansprüche

1. Flächiger Abschnitt einer Außenhaut einer Fahrzeugkarosserie, der aus einem flexiblen Material besteht, das über zumindest einen Teil eines Fahrzeuggerippes, wie beispielsweise einem Space-frame, gespannt ist, **dadurch gekennzeichnet, dass** unter oder am Rand des Abschnitts (12, 26, 36, 60, 76, 110, 116, 124, 140, 158, 162, 164, 166) mindestens ein mechanisch bewegbares Stellelement (8, 10, 28, 30, 40, 58, 74, 80, 94, 100, 106, 142, 154) vorgesehen ist, das den flächigen Abschnitt der Außenhaut verformen kann.

2. Abschnitt einer Außenhaut nach Anspruch 1, **dadurch gekennzeichnet, dass** das flexible Material (12, 26, 36, 60, 76, 110, 116, 124, 140, 158, 162, 164, 166) elastische Eigenschaften hat.

3. Abschnitt einer Außenhaut nach Anspruch 2, **dadurch gekennzeichnet, dass** der elastische Abschnitt (12, 26, 36, 60, 76, 110, 124, 140, 158, 162, 164, 166) der Außenhaut bei einem Unfall Aufprallenergie absorbieren kann.

4. Abschnitt einer Außenhaut nach einem der vorhergehenden Ansprüche, **dadurch gekennzeichnet, dass** zumindest an einem Rand des Abschnitts (12, 26, 36, 60, 76, 110, 116, 124, 140, 158, 162, 164, 166) eine Leiste (14) befestigt ist, die an einem karosseriefesten Bauteil (18) durch eine Clipsverbindung befestigbar ist.

5. Abschnitt einer Außenhaut nach Anspruch 4, **dadurch gekennzeichnet, dass** die Leiste (14) an dem Rand des Abschnitts (12, 26, 36, 60, 76, 110, 116, 124, 140, 158, 162, 164, 166) aufgenäht ist.

6. Abschnitt einer Außenhaut nach Anspruch 4 oder 5, **dadurch gekennzeichnet, dass** die Leiste (14) aus Kunststoff ist.

7. Abschnitt einer Außenhaut nach einem der vorhergehenden Ansprüche, **dadurch gekennzeichnet, dass** mindestens ein Stellelement (8, 10, 28, 30, 40, 58, 74, 80, 94, 100, 106, 142, 154) translatorisch und / oder rotatorisch bewegbar ist.

8. Abschnitt einer Außenhaut nach einem der vorhergehenden Ansprüche, **dadurch gekennzeichnet, dass** mindestens ein Stellelement (8, 10, 28, 30, 40, 58, 74, 80, 94, 100, 106, 154) durch einen mit Hilfsenergie betätigten Aktuator bewegt wird.

9. Abschnitt einer Außenhaut nach einem der vorhergehenden Ansprüche, **dadurch gekennzeichnet, dass** mindestens ein Stellelement (8, 10, 28, 30, 40, 58, 74, 80, 94, 100, 106, 142, 154) in Abhängigkeit der Fahrzeuggeschwindigkeit bewegbar ist.

10. Abschnitt einer Außenhaut nach einem der vorhergehenden Ansprüche, **dadurch gekennzeichnet, dass** der Abschnitt (36, 60) im Heckbereich eines Fahrzeuges durch mindestens ein Stellelement (40, 58) so verformbar ist, dass er einen aerodynamischen Abtrieb ähnlich wie ein Heckspoiler erzeugt.

11. Abschnitt einer Außenhaut nach Anspruch 10, **dadurch gekennzeichnet, dass** unter der Außenhaut (36) aus einem elastischen Material mindestens ein Stellelement (40) vorgesehen ist, das exzentrisch gelagert ist und / oder einen elliptischen Querschnitt aufweist, und das die Außenhaut (36) im Bereich des Endabschnitts (38) einer Heckklappe (34) so verformen kann, dass ein aerodynamischer Abtrieb erzeugt wird.

12. Abschnitt einer Außenhaut nach Anspruch 10 oder 11, **dadurch gekennzeichnet, dass** zwei schwenkbare Stellelemente vorgesehen sind.

13. Abschnitt einer Außenhaut nach einem der Ansprüche 9, 10 oder 11, **dadurch gekennzeichnet, dass** auf einem beweglichen Abschnitt eines ersten Stellelements ein zweites Stellelement angeordnet ist.

14. Abschnitt einer Außenhaut nach einem der Ansprüche 9 bis 12, **dadurch gekennzeichnet, dass** das Stellelement, das einen Spoiler (52) bildet, und ein umgebender karosserieseitiger Bereich mit dem Abschnitt aus einem flexiblen und elastischen Material (60) überspannt ist, das die Außenhaut bildet.

15. Abschnitt einer Außenhaut nach Anspruch 14, **dadurch gekennzeichnet, dass** der Spoiler (52) und der umgebende karosserieseitige Bereich so gestaltet sind, dass sich unabhängig von der Stellung des Spoilers (52) keine Randabschnitte des Spoilers (52) sichtbar in dem Abschnitt aus dem flexiblen und elastischen Material (60) markieren, das die Außenhaut bildet.

16. Abschnitt einer Außenhaut nach Anspruch 15, **dadurch gekennzeichnet, dass** der umgebende karosserieseitige Bereich eine konventionelle Heckklappe (44) mit einer Aussparung für den Spoiler (52) ist.

17. Abschnitt einer Außenhaut nach Anspruch 16, **dadurch gekennzeichnet, dass** der Spoiler (52) zumindest teilweise eine Hinterkante (50) der Heckklappe (44) bildet.

18. Abschnitt einer Außenhaut nach Anspruch 17, **dadurch gekennzeichnet, dass** in den Spoiler (52) eine Heckleuchte integriert ist, und die Außenhaut aus dem elastischen und flexiblen Material (60) im Bereich der Heckleuchte ausgespart ist.

19. Abschnitt einer Außenhaut nach einem der Ansprüche 14 bis 18, **dadurch gekennzeichnet, dass** das flexible und elastische Material (60) des Abschnitts magnetisch beschichtet ist.

20. Abschnitt einer Außenhaut nach einem der Ansprüche 14 bis 19, **dadurch gekennzeichnet, dass** das flexible und elastische Material (60) des Abschnitts zusätzlich über mindestens eine Stange (64) gespannt ist, die mit einem Ende am Spoiler (52) befestigt ist.

21. Abschnitt einer Außenhaut nach Anspruch 20, **dadurch gekennzeichnet, dass** die Stange (64) eine gebogene Form aufweist, die je nach Spoilerstellung das flexible und elastische Material (60) in einer bestimmten Form aufspannt.

22. Abschnitt einer Außenhaut nach Anspruch 21, **dadurch gekennzeichnet, dass** die Stange (64) in einer Vertiefung im umgebenden karosserieseitigen Bereich angeordnet ist, wenn der Spoiler (52) sich in der Ruhestellung befindet.

23. Abschnitt einer Außenhaut nach Anspruch 21 oder 22, **dadurch gekennzeichnet, dass** das andere Ende der Stange (64) mit einem Schlitten (66) verbunden ist, der auf dem umgebenden karosserieseitigen Bereich verlagerbar ist.

24. Abschnitt einer Außenhaut nach Anspruch 23, **dadurch gekennzeichnet, dass** der Schlitten (66) sich in einer Vertiefung im umgebenden karosserieseitigen Bereich befindet.

25. Abschnitt einer Außenhaut nach einem der Ansprüche 20 bis 24, **dadurch gekennzeichnet, dass** eine Stange (64) links und rechts eine seitliche Fortsetzung der Hinterkante (50) des Spoilers (52) bildet.

26. Abschnitt einer Außenhaut nach Anspruch 25, **dadurch gekennzeichnet, dass** die im Spoiler (52) geführte Stange (64) einteilig ausgeführt ist.

27. Abschnitt einer Außenhaut nach einem der Ansprüche 20 bis 26, **dadurch gekennzeichnet, dass** die Stange (64) eine reibungsarme Beschichtung aufweist.

28. Abschnitt einer Außenhaut nach einem der vorhergehenden Ansprüche, **dadurch gekennzeichnet, dass** der Abschnitt als Seitenschweller (70, 78) eines Fahrzeugs durch mindestens ein Stellelement (74, 80) so verformbar ist, dass sich die Aerodynamik des Fahrzeugs während der Fahrt verbessert.

29. Abschnitt einer Außenhaut nach Anspruch 28, **dadurch gekennzeichnet, dass** mindestens ein unter dem Abschnitt um eine Achse schwenkbar gelagertes Stellelement (80) vorgesehen ist, das die Außenhaut je nach Winkelstellung unterschiedlich verformt, wobei die Achse im wesentlichen in Fahrzeuglängsrichtung verläuft.

30. Abschnitt einer Außenhaut nach Anspruch 29, **dadurch gekennzeichnet, dass** das Stellelement (80) am Umfang um die Achse unterschiedliche radiale Erstreckungen (82, 84, 86) aufweist.

31. Abschnitt einer Außenhaut nach einem der vorhergehenden Ansprüche, **dadurch gekennzeichnet, dass** der Abschnitt eine Klappe (88) eines Fahrzeugs bildet, die durch das Stellelement geöffnet oder geschlossen werden kann.

32. Abschnitt einer Außenhaut nach Anspruch 31, **dadurch gekennzeichnet, dass** der Abschnitt einen Schlitz aufweist, der zu einer Öffnung verbreitert werden kann.

33. Abschnitt einer Außenhaut nach einem der vorhergehenden Ansprüche, **dadurch gekennzeichnet, dass** die Klappe (88) von zwei Abschnitten (90, 92) gebildet wird, die aneinander grenzen, und die an ihrer Stoßstelle auseinander bewegt werden können, sodass eine Öffnung entsteht.

34. Abschnitt einer Außenhaut nach Anspruch 32 oder 33, **dadurch gekennzeichnet, dass** die beiden Schlitzseiten bzw. die beiden Abschnitte (90, 92) an ihrer Stoßstelle durch einen Reißverschluss (94) miteinander verbindbar sind.

35. Abschnitt einer Außenhaut nach Anspruch 32 oder 33, **dadurch gekennzeichnet, dass** die beiden Schlitzseiten bzw. die beiden Abschnitte (90, 92) an ihrer Stoßstelle durch eine Clipsverbindung miteinander verbindbar sind.

36. Abschnitt einer Außenhaut nach Anspruch 32 oder 33, **dadurch gekennzeichnet, dass** entlang des Schlitzes bzw. der Ränder der Abschnitte (90, 92) eine steife Leiste an mindestens einem Abschnitt befestigt ist, wobei mindestens eine dieser Leisten durch mindestens ein Stellelement verlagerbar ist.

37. Abschnitt einer Außenhaut nach einem der vorhergehenden Ansprüche, **dadurch gekennzeichnet, dass** er als Außenhaut einer Heckklappe (96) ermöglicht, dass diese in der Längsrichtung des Fahrzeugs längenvariabel ist, wenn durch ein Stellelement die Heckscheibe (100) in Längsrichtung verlagert wird.

38. Abschnitt einer Außenhaut nach einem der vorhergehenden Ansprüche, **dadurch gekennzeichnet, dass** der Abschnitt (110) als Bug- oder Heckteil (102) eines Fahrzeugs durch mindestens ein schwenkbares Stellelement (106) in der aerodynamischen Form veränderbar ist.

39. Abschnitt einer Außenhaut nach einem der vorhergehenden Ansprüche, **dadurch gekennzeichnet, dass** der Abschnitt als Unterboden (112) eines Fahrzeugs durch ein Stellelement absenkbar ist.

40. Abschnitt einer Außenhaut nach einem der vorhergehenden Ansprüche, **dadurch gekennzeichnet, dass** der Abschnitt (124) einstückig zugleich Kotflügel (126) und Türaußenblech ist, wobei die Tür (128) das Stellelement darstellt.

41. Abschnitt einer Außenhaut nach einem der vorhergehenden Ansprüche, **dadurch gekennzeichnet, dass** der Abschnitt (140) als Türaußenblech in der Höhe der Oberkante (138) des eigentlichen Türkörpers (136) durch ein Stellelement veränderbar ist.

42. Abschnitt einer Außenhaut nach einem der vorhergehenden Ansprüche, **dadurch gekennzeichnet, dass** der Abschnitt als Kotflügel (148) und Radhausverkleidung (146) sowohl am Fahrwerk (154) als auch am Fahrzeuggerippe befestigt ist.

43. Abschnitt einer Außenhaut nach einem der vorhergehenden Ansprüche, **dadurch gekennzeichnet, dass** der Abschnitt als Fahrzeugdach (158) mit der Hinterkante in Längsrichtung des Fahrzeuges durch ein Stellelement verlagerbar ist.

44. Abschnitt einer Außenhaut nach einem der vorhergehenden Ansprüche, **dadurch gekennzeichnet, dass** der Abschnitt (162, 164) durch zumindest ein Stellelement so verformbar ist, dass je nach Position des Stellelements der Abschnitt (162, 164) einen Scheinwerfer (160) und / oder einen Kühlergrill unterschiedlich weit und / oder unterschiedliche Teilbereiche des Scheinwerfers (160) und / oder des Kühlergrills verdeckt.

45. Abschnitt einer Außenhaut nach Anspruch 44, **dadurch gekennzeichnet, dass** zumindest zwei Abschnitte (162, 164) einen Scheinwerfer (160) oder einen Kühlergrill unterschiedlich weit und / oder unterschiedliche Teilbereiche des Scheinwerfers (160) oder des Kühlergrills verdecken.

46. Abschnitt einer Außenhaut nach einem der vorhergehenden Ansprüche, **dadurch gekennzeichnet, dass** unter dem Abschnitt (166) zumindest eine Beleuchtungseinrichtung (168) angebracht ist, die zumindest teilweise durch den Abschnitt (166) hindurch leuchtet.

47. Abschnitt einer Außenhaut nach Anspruch 46, **dadurch gekennzeichnet, dass** der Leuchtkörper direkt an dem Abschnitt (166) befestigt ist.

48. Abschnitt einer Außenhaut nach einem der vorhergehenden Ansprüche, **dadurch gekennzeichnet, dass** mindestens ein Stellelement ein Steckelement (170) ist, das in zumindest eine karosseriefeste Aufnahme (172) leicht lösbar eingesteckt werden kann, und einen Teil des Fahrzeuggerippes bildet, über den der elastische Abschnitt (174) gespannt ist.

49. Abschnitt einer Außenhaut nach einem der Ansprüche 2 bis 48, **dadurch gekennzeichnet, dass** der elastische Abschnitt aus einem flexiblen textilen Flächengebilde besteht, das zumindest auf der sichtbaren Seite beschichtet ist.

50. Abschnitt einer Außenhaut nach Anspruch 49, **dadurch gekennzeichnet, dass** das textile Flächengebilde ein Gewirke oder ein Gestricke ist.

51. Abschnitt einer Außenhaut nach Anspruch 49 oder 50, **dadurch gekennzeichnet, dass** das textile Flächengebilde aus Fasern aus PES bzw. PEN besteht.

52. Abschnitt einer Außenhaut nach einem der Ansprüche 49, 50 oder 51, **dadurch gekennzeichnet, dass** das textile Flächengebilde auch Fasern enthält, die als Aktuatoren und / oder Sensoren dienen können.

53. Abschnitt einer Außenhaut nach einem der Ansprüche 49 bis 52, **dadurch gekennzeichnet, dass** die Beschichtung (178, 180) aus einer Klebstoffschicht, einer aromatischen Zwischenschicht und einer aliphatischen Abschlussschicht besteht.

54. Abschnitt einer Außenhaut nach einem der Ansprüche 49 bis 53, **dadurch gekennzeichnet, dass** die Beschichtung (178) einen UV-Schutz bietet.

55. Abschnitt einer Außenhaut nach einem der Ansprüche 49 bis 54, **dadurch gekennzeichnet, dass** die Beschichtung (178) wasserdicht ist.

56. Abschnitt einer Außenhaut nach einem der Ansprüche 49 bis 55, **dadurch gekennzeichnet, dass** die Beschichtung (180) magnetisch ist.

57. Abschnitt einer Außenhaut nach einem der Ansprüche 49 bis 56, **dadurch gekennzeichnet, dass** die Beschichtung (178) einer lackierten Blechoberfläche sehr ähnlich sieht.

58. Abschnitt einer Außenhaut nach einem der Ansprüche 49 bis 57, **dadurch gekennzeichnet, dass** das Material vorgereckt ist.

## Claims

1. A thin portion of a skin on a vehicle body, made of a flexible material and stretched over at least a part of a carcass such as a space frame, **characterised in that** at least one mechanically movable adjusting element (8, 10, 28, 30, 40, 58, 74, 80, 94, 100, 106, 142, 154) is provided under or on the edge of the portion (12, 26, 36, 60,76, 110, 116, 124, 140, 158, 162, 164, 166) and can alter the shape of the thin portion of the skin.

2. A skin portion according to claim 1, **characterised in that** the flexible material (12, 26, 36, 60, 76, 110, 116, 124, 140, 158, 162, 164, 166) has elastic properties.

3. A skin portion according to claim 2, **characterised in that** the elastic portion (12, 26, 36, 60, 76, 110, 124, 140, 158, 162, 164, 166) of the skin can absorb energy of impact in the event of an accident.

4. A skin portion according to any of the preceding claims, **characterised in that** a strip (14) is fastened to at least one edge of the portion (12, 26, 36, 60, 76, 110, 116, 124, 140, 1 58, 162, 164, 166) and is attachable to a fixed body component (18) by a clip connection.

5. A skin portion according to claim 4, **characterised in that** the strip (14) is sewn to the edge of the portion (12, 26, 36, 60, 76, 110, 116, 124, 140, 158, 162, 164, 166).

6. A skin portion according to claim 4 or claim 5, **characterised in that** the strip (14) is of plastics material.

7. A skin portion according to any of the preceding claims, **characterised in that** at least one adjusting element (8, 10, 28, 30, 40, 58, 74, 80, 94, 100, 106, 142, 154) is movable in translation and/or rotation.

8. A skin portion according to any of the preceding claims, **characterised in that** at least one adjusting element (8, 10, 28, 30, 40, 58, 74, 80, 94, 100, 106, 154) is moved by a self-operated actuator.

9. A skin portion according to any of the preceding claims, **characterised in that** at least one adjusting element (8, 10, 28, 30, 40, 58, 74, 80, 94, 100, 106, 142, 1 54) is movable in dependence on the speed of the vehicle.

10. A skin portion according to any of the preceding claims, **characterised in that** in the rear region of a vehicle the portion (36, 60) is deformable by at least one adjusting element (40, 58) so that it generates a negative aerodynamic lift like a rear spoiler.

11. A skin portion according to claim 10, **characterised in that** at least one adjusting element (40) of an elastic material under the skin (36) is eccentrically mounted and/or has an elliptical cross-section, and in the region of the end portion (38) of a tailgate (34) the skin can be deformed so as to generate a negative aerodynamic lift.

12. A skin portion according to claim 10 or claim 11, **characterised in that** two pivotable adjusting elements are provided.

13. A skin portion according to any of claims 9, 10 or 11, **characterised in that** a second adjusting element is disposed on a movable portion of a first adjusting element.

14. A skin portion according to any of claims 9 to 12, **characterised in that** the adjusting element forming a spoiler (52) and a surrounding body region are covered by the portion of a flexible, elastic material (60) forming the skin.

15. A skin portion according to claim 14, **characterised in that** the spoiler (52) and the surrounding body region are shaped so that irrespective of the position of the spoiler (52) they do not define or outline any edge portions of the spoiler (52) in the portion of flexible and elastic material (60) constituting the skin.

16. A skin portion according to claim 15, **characterised in that** the surrounding body region is a conventional tailgate (44) with a recess for the spoiler (52).

17. A skin portion according to claim 16, **characterised in that** the spoiler (52) forms at least part of a rear edge (50) of the tailgate (44).

18. A skin portion according to claim 17, **characterised in that** a rear lighting fixture is incorporated in the spoiler (52) and the skin of elastic, flexible material (60) is recessed in the region of the lighting fixture.

19. A skin portion according to any of claims 14 to 18, **characterised in that** the flexible elastic material (60) of the portion has a magnetic coating.

20. A skin portion according to any of claims 14 to 19, **characterised in that** the flexible elastic material (60) of the portion is additionally stretched over at least one rod (64) fastened at one end to the spoiler (52).

21. A skin portion according to claim 20, **characterised in that** the rod (64) is bent and stretches the flexible elastic material (60) in a defined shape in dependence on the position of the spoiler.

22. A skin portion according to claim 21, **characterised in that** the rod (64) is disposed in a recess in the surrounding body region when the spoiler (52) is in the inoperative position.

23. A skin portion according to claim 21 or claim 22, **characterised in that** the other end of the rod (64) is connected to a slide (66) movable on the surrounding body region.

24. A skin portion according to claim 23, **characterised in that** the slide (66) is in a recess in the surrounding body region.

25. A skin portion according to any of claims 20 to 24, **characterised in that** a rod (64) forms a lateral continuation of the rear edge (50) of the spoiler (52) to left and right.

26. A skin portion according to claim 25, **characterised in that** the rod (64) guided in the spoiler (62) is in one piece.

27. A skin portion according to any of claims 20 to 26, **characterised in that** the rod (64) has a low-friction coating.

28. A skin portion according to any of the preceding claims, **characterised in that** the portion, which is in the form of a side sillboard (70, 78) of a vehicle, is deformable by at least one adjusting element (74, 80) so as to improve the aerodynamics of the vehicle when in motion.

29. A skin portion according to claim 28, **characterised in that** at least one adjusting element (80) pivotable around an axis is provided and variously deforms the skin in dependence on the angular position, wherein the axis extends substantially in the longitudinal direction of the vehicle.

30. A skin portion according to claim 29, **characterised in that** the adjusting element (80) projects radially (82, 84, 86) to different amounts round the axis on the periphery.

31. A skin portion according to any of the preceding claims, **characterised in that** the portion is in the form of a flap or bonnet (88) of a vehicle which can be opened or closed by the adjusting element.

32. A skin portion according to claim 31 , **characterised in that** the portion has a slit which can be widened to form an opening.

33. A skin portion according to any of the preceding claims, **characterised in that** the flap (88) is formed by two portions (90, 92) which adjoin one another and can be moved apart at the joint so as to form an opening.

34. A skin portion according to claim 32 or claim 33, **characterised in that** the two sides of the slot or the two portions (90, 92) are connectable to one another by a zip-fastener (94) at the place of contact.

35. A skin portion according to claim 32 or claim 33, **characterised in that** the two sides of the slit or the two portions (90, 92) are connectable to one another by a clip connection at the place of contact.

36. A skin portion according to claim 32 or claim 33, **characterised in that** along the slot or the edges of the portions (90. 92) a stiff strip is fastened to at least one portion, wherein at least one strip is movable by at least one adjusting element.

37. A skin portion according to any of the preceding claims, **characterised in that** it is the skin of a tailgate (96) and is movable in the longitudinal direction of the vehicle when the rear window (100) is moved in the longitudinal direction by an adjusting element.

38. A skin portion according to any of the preceding claims, **characterised in that** the portion (110) is a front or a rear part (102) of a vehicle and its aerodynamic shape is changeable by at least one pivotable adjusting element (106).

39. A skin portion according to any of the preceding claims, **characterised in that** the portion is the floor (112) of a vehicle and can be lowered by an adjusting element.

40. A skin portion according to any of the preceding claims, **characterised in that** the portion (124) is a mudguard (126) integral with an outside door panel, wherein the door (128) constitutes the adjusting element.

41. A skin portion according to any of the preceding claims, **characterised in that** the portion (140) is an outside door panel which can be altered by an adjusting element at the level of the top edge (138) of the actual door body (136).

42. A skin portion according to any of the preceding claims, **characterised in that** the portion is a mudguard (148) and wheel-house cover (146) and is fastened to the running gear (154) and to the carcass.

43. A skin portion according to any of the preceding claims, **characterised in that** the portion is a vehicle roof (158) and its rear edge can be moved in the longitudinal direction of the vehicle by an adjusting element.

44. A skin portion according to any of the preceding claims, **characterised in that** the portion (162, 164) is deformable by at least one adjusting element so that depending on the position of the adjusting element, the portion (162, 164) covers a headlamp (160) and/or a radiator grille over a varying width and/or covers various part-regions of the headlamp (160) and/or the radiator grille.

45. A skin portion according to claim 44, **characterised in that** at least two portions (162, 164) cover a headlamp (160) or a radiator grille over a varying width and/or cover various part-regions of the headlamp (160) or radiator grille.

46. A skin portion according to any of the preceding claims, **characterised in that** at least one lighting fixture (168) is disposed under the portion (166) and shines at least partly through the portion (166).

47. A skin portion according to claim 46, **characterised in that** the radiant body is directly fastened to the portion (166).

48. A skin portion according to any of the preceding claims, **characterised in that** at least one adjusting element is a plug-in element (170) which can be plugged in easily releasable manner into at least one fixed body recess (172) and forms a part of the carcass over which the elastic portion (174) is stretched.

49. A skin portion according to any of claims 2 to 48, **characterised in that** the elastic portion is a thin flexible textile structure coated at least one the visible side.

50. A skin portion according to claim 49, **characterised in that** the textile structure is a woven or knitted fabric.

51. A skin portion according to claim 49 or claim 50, **characterised in that** the thin textile structure is of PES or PEN fibres.

52. A skin portion according to any of claims 49, 50 or 51, **characterised in that** the thin textile structure also contains fibres which can serve as actuators and/or sensors.

53. A skin portion according to any of claims 49 to 52, **characterised in that** the coating (178, 180) comprises an adhesive layer, an aromatic intermediate layer and an aliphatic cover layer.

54. A skin portion according to any of claims 49 to 53, **characterised in that** the coating (178) provides a UV screen.

55. A skin portion according to any of claims 49 to 54, **characterised in that** the coating (178) is watertight.

56. A skin portion according to any of claims 49 to 55, **characterised in that** the coating (180) is magnetic.

57. A skin portion according to any of claims 49 to 56, **characterised in that** the coating (178) is very similar in appearance to a painted sheet-metal surface.

58. A skin portion according to any of claims 49 to 57, **characterised in that** the material is pre-stretched.

## Revendications

1. Section plate d'une enveloppe externe d'une carrosserie de véhicule, composée d'un matériau flexible tendu par-dessus au moins une partie d'une ossature de véhicule, par exemple un cadre « space-frame »,
**caractérisée en ce que**
en dessous ou au bord de la section (12, 26, 36, 60, 76, 110, 116, 124, 140, 158, 162, 164, 166) au moins un élément de réglage (8, 10, 28, 30, 40, 58, 74, 80, 94, 100, 106, 142, 154) amovible mécaniquement peut déformer la section plate de l'enveloppe externe.

2. Section d'une enveloppe externe selon la revendication 1,
**caractérisée en ce que**
le matériau flexible (12, 26, 36, 60, 76, 110, 116, 124, 140, 158, 162, 164, 166) possède des propriétés élastiques.

3. Section d'une enveloppe externe selon la revendication 2,
**caractérisée en ce que**
la section élastique (12, 26, 36, 60, 76, 110, 116, 124, 140, 158, 162, 164, 166) de l'enveloppe externe peut, en cas d'accident, absorber de l'énergie de choc.

4. Section d'une enveloppe externe selon l'une des revendications précédentes,
**caractérisée en ce qu'**
au moins sur un bord de la section (12, 26, 36, 60, 76, 110, 116, 124, 140, 158, 162, 164, 166) est fixée une baguette (14) qui peut être fixée sur un élément de construction fixe sur la carrosserie (18) au moyen d'une liaison par clip.

5. Section d'une enveloppe externe selon la revendication 4,
**caractérisée en ce que**
la baguette (14) est cousue sur le bord de la section (12, 26, 36, 60, 76, 110, 116, 124, 140, 158, 162, 164, 166).

6. Section d'une enveloppe externe selon la revendication 4 ou 5,
**caractérisée en ce que**
la baguette (14) est en matière plastique.

7. Section d'une enveloppe externe selon l'une des revendications précédentes,
**caractérisée en ce qu'**
au moins un élément de réglage (8, 10, 28, 30, 40, 58, 74, 80, 94, 100, 106, 142, 154) amovible par translation et/ou par rotation.

8. Section d'une enveloppe externe selon l'une des revendications précédentes,
**caractérisée en ce qu'**
au moins un élément de réglage (8, 10, 28, 30, 40, 58, 74, 80, 94, 100, 106, 154) est mis en mouvement par un actionneur actionné à l'aide d'énergie auxiliaire.

9. Section d'une enveloppe externe selon l'une des revendications précédentes,
**caractérisée en ce qu'**
au moins un élément de réglage (8, 10, 28, 30, 40, 58, 74, 80, 94, 100, 106, 142, 154) peut être mis en mouvement en fonction de la vitesse du véhicule.

10. Section d'une enveloppe externe selon l'une des revendications précédentes,
**caractérisée en ce que**
la section (36, 60) est déformable, dans la zone arrière d'un véhicule, par au moins un élément de réglage (40, 58) pour créer une dérive aérodynamique à la manière d'un becquet arrière.

11. Section d'une enveloppe externe selon la revendication 10,
**caractérisée en ce que**
sous l'enveloppe externe (36) faite d'un matériau élastique est prévu au moins un élément de réglage (40) logé de manière excentrée et/ou qui présente une section transversale elliptique et peut déformer l'enveloppe externe (36), dans la zone de la section terminale (38) d'un hayon arrière (34) pour créer une dérive aérodynamique.

12. Section d'une enveloppe externe selon l'une des revendications 10
ou 11,
**caractérisée par**
deux éléments de réglage pivotants.

13. Section d'une enveloppe externe selon la revendication 9, 10 ou 11,
**caractérisée en ce qu'**
une section mobile d'un premier élément de réglage comporte un second élément de réglage.

14. Section d'une enveloppe externe selon l'une des revendications 9 à12,
**caractérisée en ce que**
l'élément de réglage formant un becquet (52), et une zone environnante du côté de la carrosserie, sont recouverts par une section en matériau flexible et élastique (60) qui forme l'enveloppe externe.

15. Section d'une enveloppe externe selon la revendication 14,
**caractérisée en ce que**
le becquet (52) et la zone environnante du côté de la carrosserie sont configurés pour qu'indépendamment de la position du becquet (52), aucune section de bord du becquet (52) ne se démarquant visiblement dans la section qui forme l'enveloppe externe en matériau flexible et élastique (60).

16. Section d'une enveloppe externe selon la revendication 15, **caractérisée en ce que**
la zone environnante du côté de la carrosserie est un hayon arrière (44) de type classique comportant un évidement pour recevoir le becquet (52).

17. Section d'une enveloppe externe selon la revendication 16,
**caractérisée en ce que**
le becquet (52) forme au moins partiellement une arête postérieure (50) du hayon arrière(44).

18. Section d'une enveloppe externe selon la revendication 17,
**caractérisée en ce que**
dans le becquet (52) est intégré un feu arrière, et l'enveloppe externe en matériau élastique et flexible (60) est évidée dans la zone du feu arrière.

19. Section d'une enveloppe externe selon l'une des revendications 14 à 18,
**caractérisée en ce que**
le matériau flexible et élastique (60) de la section est fixé magnétiquement.

20. Section d'une enveloppe externe selon l'une des revendications 14 à 19,
**caractérisée en ce que**
le matériau flexible et élastique (60) de la section est en outre tendu au-dessus d'au moins une barre (64) qui, par une de ses extrémités, est fixée au becquet (52).

21. Section d'une enveloppe externe selon la revendication 20,
**caractérisée en ce que**
la barre (64) présente une forme recourbée qui, en fonction de la position du becquet, tend le matériau flexible et élastique (60) sous une certaine forme.

22. Section d'une enveloppe externe selon la revendication 21,
**caractérisée en ce que**
la barre (64) est disposée dans un creux dans la zone environnante du côté de la carrosserie, lorsque le becquet (52) se trouve en position de repos.

23. Section d'une enveloppe externe selon la revendication 22,
**caractérisée en ce que**
l'autre extrémité de la barre (64) est reliée à une plaque coulissante (66) déplaçable dans la zone environnante du côté de la carrosserie.

24. Section d'une enveloppe externe selon la revendication 23,
**caractérisée en ce que**
la plaque coulissante (66) se trouve dans un creux dans la zone environnante du côté de la carrosserie.

25. Section d'une enveloppe externe selon l'une des revendications 20 à 24,
**caractérisée en ce qu'**
une barre (64) forme à gauche et à droite un prolongement latéral de l'arête postérieure (50) du becquet (52).

26. Section d'une enveloppe externe selon la revendication 25,
**caractérisée en ce que**
la barre (64) guidée dans le becquet (52) est faite d'une seule pièce.

27. Section d'une enveloppe externe selon l'une des revendications 20 à 26,
**caractérisée en ce que**
la barre (64) présente un revêtement à faible frottement.

28. Section d'une enveloppe externe selon l'une des revendications précédentes,
**caractérisée en ce que**
la section, en tant que seuil latéral (70, 78) d'un véhicule, est déformable, au moyen d'au moins un élément de réglage (74, 80) qui améliore l'aérodynamique du véhicule durant le déplacement.

29. Section d'une enveloppe externe selon la revendication 28,
**caractérisée en ce qu'**
au moins un élément de réglage (80) logé en dessous de la section de manière à pivoter autour d'un axe, déforme en fonction de sa position angulaire l'enveloppe externe de manière variable, l'axe étant orienté essentiellement dans la direction longitudinale du véhicule.

30. Section d'une enveloppe externe selon la revendication 29,
**caractérisée en ce que**
l'élément de réglage (80) présente, sur l'étendue de l'axe, des extensions radiales variables (82, 84, 86).

31. Section d'une enveloppe externe selon l'une des revendications précédentes,
**caractérisée en ce que**
la section forme un volet (88) d'un véhicule qui peut être ouvert ou fermé au moyen de l'élément de réglage.

32. Section d'une enveloppe externe selon la revendication 31,
**caractérisée en ce que**
la section présente une fente qui peut être élargie de manière à former une ouverture.

33. Section d'une enveloppe externe selon l'une des revendications précédentes,
**caractérisée en ce que**
le volet (88) est formé de deux sections (90, 92) limitrophes entre elles et qui, au niveau de leur joint, peuvent être écartées l'une de l'autre pour créer une ouverture.

34. Section d'une enveloppe externe selon la revendication 32 ou 33,
**caractérisée en ce que**
les deux côtés de la fente, ou encore les deux sections (90, 92), peuvent être reliés entre eux, au niveau de leur joint, par une fermeture à glissière (94).

35. Section d'une enveloppe externe selon la revendication 32 ou 33,
**caractérisée en ce que**
les deux côtés de la fente, ou encore les deux sections (90, 92), peuvent être reliés entre eux, au niveau de leur joint, par une liaison par clip.

36. Section d'une enveloppe externe selon la revendication 32 ou 33,
**caractérisée en ce que**
le long de la fente ou encore des bords des sections (90, 92), une baguette rigide est fixée sur au moins une section, au moins une de ces baguettes pouvant être déplacée au moyen d'au moins un élément de réglage.

37. Section d'une enveloppe externe selon l'une des revendications précédentes,
**caractérisée en ce qu'**
en tant qu'enveloppe externe d'un hayon arrière (96), elle permet de modifier sa longueur en direction longitudinale du véhicule lorsque la lunette arrière (100) est déplacée suivant la direction longitudinale au moyen d'un élément de réglage.

38. Section d'une enveloppe externe selon l'une des revendications précédentes,
**caractérisée en ce qu'**
en tant que partie avant ou arrière (102) d'un véhicule, la section (110) peut être modifiée, du point de vue de sa forme aérodynamique, au moyen d'au moins un élément de réglage pivotant (106).

39. Section d'une enveloppe externe selon l'une des revendications précédentes,
**caractérisée en ce qu'**
en tant que dessous de caisse (112) d'un véhicule, la section peut être abaissée au moyen d'un élément de réglage.

40. Section d'une enveloppe externe selon l'une des revendications précédentes,
**caractérisée en ce que**
la section (124) constitue, d'une seule pièce, à la fois le garde-boue (126) et la tôle extérieure de portière, la portière (128) représentant l'élément de réglage.

41. Section d'une enveloppe externe selon l'une des revendications précédentes,
**caractérisée en ce qu'**
en tant que tôle extérieure de portière, la section (140) peut être modifiée au moyen d'un élément de réglage du point de vue de la hauteur de l'arête supérieure (138) du corps de portière proprement dit (136).

42. Section d'une enveloppe externe selon l'une des revendications précédentes,
**caractérisée en ce qu'**
en tant que garde-boue (148) et revêtement du coffre de roue (146), la section est fixée aussi bien à la suspension (154) qu'à l'ossature du véhicule.

43. Section d'une enveloppe externe selon l'une des revendications précédentes,
**caractérisée en ce qu'**
en tant que toit du véhicule (158), la section est déplaçable au moyen d'un élément de réglage, avec l'arête postérieure, en direction longitudinale du véhicule.

44. Section d'une enveloppe externe selon l'une des revendications précédentes,
**caractérisée en ce que**
la section (162, 164) est déformable au moyen d'au moins un élément de réglage de telle manière qu'en fonction de la position de l'élément de réglage, la section (162, 164) recouvre un phare (160) et/ou une calandre sur une étendue variable et/ou des zones partielles variables du phare (160) et/ ou de la calandre.

45. Section d'une enveloppe externe selon l'une des revendications précédentes,
**caractérisée en ce qu'**
au moins deux sections (162, 164) recouvrent un phare (160) et/ou une calandre sur une étendue variable et/ou des zones partielles variables du phare (160) et/ou de la calandre.

46. Section d'une enveloppe externe selon l'une des revendications précédentes,
**caractérisée en ce que**
sous la section (166) est mis en place au moins un dispositif d'éclairage (168) qui rayonne au moins partiellement à travers la section (166).

47. Section d'une enveloppe externe selon l'une des revendications précédentes,
**caractérisée en ce que**
le luminaire est fixé directement sur la section (166).

48. Section d'une enveloppe externe selon l'une des revendications précédentes,
**caractérisée en ce qu'**
au moins un élément de réglage est un élément enfichable (170) qui peut être enfiché de manière facilement détachable dans au moins un logement (172) fixe sur la carrosserie et qui forme une partie de l'ossature du véhicule par-dessus laquelle est tendue la section élastique (174) .

49. Section d'une enveloppe externe selon l'une des revendications 2 à 48,
**caractérisée en ce que**
la section élastique se compose d'une structure textile flexible plane qui est revêtue au moins sur son côté visible.

50. Section d'une enveloppe externe selon la revendication 49,
**caractérisée en ce que**
la structure textile plane est un tricot ou un maillage.

51. Section d'une enveloppe externe selon la revendication 49 ou 50,
**caractérisée en ce que**
la structure textile plane se compose de fibres en polyester (PES) ou PEN.

52. Section d'une enveloppe externe selon l'une des revendications 49, 50 ou 51,
**caractérisée en ce que**
la structure textile plane contient également des fibres pouvant servir d'actionneurs et/ou de détecteurs.

53. Section d'une enveloppe externe selon l'une des revendications 49 à 52,
**caractérisée en ce que**
le revêtement (178, 180) se compose d'une couche de colle, d'une couche intermédiaire aromatique et d'une couche de fermeture aliphatique.

54. Section d'une enveloppe externe selon l'une des revendications 49 à 53,
**caractérisée en ce que**
le revêtement (178) offre une protection contre l'ultraviolet.

55. Section d'une enveloppe externe selon l'une des revendications 49 à 54,
**caractérisée en ce que**
le revêtement (178) est imperméable à l'eau.

56. Section d'une enveloppe externe selon l'une des revendications 49 à 55,
**caractérisée en ce que**
le revêtement (180) est magnétique.

57. Section d'une enveloppe externe selon l'une des revendications 49 à 56,
**caractérisée en ce que**
le revêtement (178) a l'aspect d'une surface de tôle vernie.

58. Section d'une enveloppe externe selon l'une des revendications 49 à 57,
**caractérisée en ce que**
le matériau est étiré au préalable.
